# EUROPEAN PATENT SPECIFICATION

(11) **EP 3 576 438 B1**
(45) Date of publication and mention of the grant of the patent: **22.07.2020**
(21) Application number: 19181979.6
(22) Date of filing: 11.08.2015
(51) Int. Cl.: H04W 4/024, H04W 4/029, H04W 4/44, H04W 4/90, G01S 5/00, G01S 19/48

(54) **METHOD FOR ENHANCING THE SECURITY OF NAVIGATING A VEHICLE BY PROVIDING REAL-TIME NAVIGATION DATA TO THE VEHICLE VIA A MOBILE COMMUNICATION NETWORK, SYSTEM FOR ENHANCING THE SECURITY OF NAVIGATING A VEHICLE BY PROVIDING REAL-TIME NAVIGATION DATA TO THE VEHICLE VIA A MOBILE COMMUNICATION NETWORK, PROGRAM AND COMPUTER PROGRAM PRODUCT**
VERFAHREN ZUR VERBESSERUNG DER SICHERHEIT ZUM NAVIGIEREN EINES FAHRZEUGS DURCH DIE BEREITSTELLUNG VON ECHTZEITNAVIGATIONSDATEN FÜR DAS FAHRZEUG ÜBER EIN MOBILKOMMUNIKATIONSNETZ, SYSTEM ZUR VERBESSERUNG DER SICHERHEIT ZUM NAVIGIEREN EINES FAHRZEUGS DURCH DIE BEREITSTELLUNG VON ECHTZEITNAVIGATIONSDATEN FÜR DAS FAHRZEUG ÜBER EIN MOBILKOMMUNIKATIONSNETZ, PROGRAMM UND COMPUTERPROGRAMMPRODUKT
PROCÉDÉ POUR AMÉLIORER LA SÉCURITÉ DE LA NAVIGATION D'UN VÉHICULE PAR LA FOURNITURE EN TEMPS RÉEL DE DONNÉES DE NAVIGATION AU VÉHICULE PAR L'INTERMÉDIAIRE D'UN RÉSEAU DE COMMUNICATION MOBILE, SYSTÈME POUR AMÉLIORER LA SÉCURITÉ DE LA NAVIGATION D'UN VÉHICULE PAR LA FOURNITURE EN TEMPS RÉEL DE DONNÉES DE NAVIGATION AU VÉHICULE PAR L' INTERMÉDIAIRE D'UN RÉSEAU DE COMMUNICATION MOBILE, PROGRAMME ET PRODUIT PROGRAMME INFORMATIQUE

(43) Date of publication of application: 04.12.2019
(62) Divisional of application: 15180640.3
(73) Proprietor: Deutsche Telekom AG, 53113 Bonn (DE)
(72) Inventor: VAN DEN BERGE, Fridtjof, 53227 Bonn (DE)
(74) Representative: Schwöbel, Thilo K.

(56) References cited:
- DE-A1-102012 213 619
- US-A1- 2004 181 340

## Description

### BACKGROUND

The present invention relates a method for enhancing the security of navigating a vehicle by providing real-time navigation data to the vehicle via a mobile communication network, wherein the mobile communication network comprises a radio access network, the radio access network comprising a coverage region, wherein at least one remote sensing system is connected to the mobile communication network, the at least one remote sensing system comprising a remote sensing system, the remote sensing system comprising a remote sensing region.

Furthermore, the present invention relates to a system for enhancing the security of navigating a vehicle by providing real-time navigation data to the vehicle via a mobile communication network, wherein the system comprises the mobile communication network and at least one remote sensing system, wherein the mobile communication network comprises a radio access network, the radio access network comprising a coverage region, wherein the at least one remote sensing system is connected to the mobile communication network, the at least one remote sensing system comprising a remote sensing system, the remote sensing system comprising a remote sensing region.

Furthermore, the present invention relates to a program and to a computer program product for enhancing the security of navigating a vehicle by providing real-time navigation data to the vehicle via a mobile communication network.

Typically, vehicles have relatively constrained abilities with regard to travelling under hazardous conditions while travelling in or on at least one of the mediums air, land and water. Such vehicles may include aircrafts which make use of the air medium and may include all types of vehicles (and ships) that are either floating through air or flying using rotor blades and/or wings through the air. Land vehicles may comprise an air cushion, a chain track or wheels which enables them to be propelled over the surface (of e. g. a road). Watercrafts may include motor boats, speed boats, sailing boats, jolly-boats and all other types of wind-driven nautical vessel (e.g. a trimaran). Furthermore, hybrid vehicles exist. Aircrafts may typically fully depend on their instrumentation and a flight control system. Regarding motor driven land vehicles, the digitalisation of their equipments is increasing, but is typically restricted to navigational features, entertainment features and overviews on the vehicle-parameter features.

External information systems may be used to inform vehicle users via a radio station that a traffic jam has occurred just around the corner of the street the users are driving. Navigational and information systems may provide similar functionalities on situations within a certain surrounding. However, neither of the aforementioned systems would be considered near-time information in case traffic jams were already resolved while still being announced on the radio. Watercrafts are typically equipped with sea maps and navigational equipment including a compass and tilt-meter, which - however - may be considered unsuitable to increase safety, for example, under relatively poor visual conditions.

In order to provide real-time information to vehicles (aircrafts, watercrafts or even land vehicles - especially military or civilian commercial aircrafts), radar images are provided within the vehicle using on-board radar systems. Typically, aircrafts being equipped with a radar system are primarily designed for commercial or military use or are mostly found in higher and more expensive privately owned entities. However, a relatively large number of worldwide existing aircrafts may be either unsuitable for a normal radar installation in, e. g., a nose cone or lack the engine power to compensate any losses in the load capacity by the weight of appropriate equipment. For example, such vehicles may include (mainly single) engine-propelled aircrafts and certain sorts of helicopters. Radar systems and/or recorder systems as well as both a Flight Data Recorder (FDR) and Voice Data Recorder (VDR) are installed in vehicles for commercial use, for example aircrafts or cargo planes. Most military aircrafts may be equipped with a radar system and include the before mentioned Flight Data Recorder (FDR) and Voice Data Recorder (VDR).

As a consequence, vehicles with on-board radar systems may be considered unsuitable in most cases (e.g. for private use), especially due to a rather expensive radar system and/or rather difficult and awkward installation of the radar system, especially in already built entities. Moreover, energy consumption and/or the weight of such vehicles may be considered relatively high due to an on-board radar system. On the contrary, without such an on-board radar system, the vehicle may be left without radar images under hazardous situations in which objects remain undetected. Thus, real-time hazard prevention mechanisms may fail or become ineffective.

The documents US 2004/181340 A1 and DE 10 2012 213619 A1 represent relevant prior art in the technical field.

### SUMMARY

It is an object of the present invention to enhance the security of navigating a vehicle, especially for aircrafts, watercrafts and/or land vehicles without an on-board radar system.

The object of the present invention is achieved by a method for enhancing the security of navigating a vehicle by providing real-time navigation data to the vehicle via a mobile communication network, wherein the mobile communication network comprises a radio access network, the radio access network comprising a coverage region, wherein at least one remote sensing system is connected to the mobile communication network, the at least one remote sensing system comprising a remote sensing system, the remote sensing system comprising a remote sensing region, wherein the remote sensing region at least partially overlaps with the coverage region, wherein the mobile communication network comprises a server entity, wherein the method comprises the following steps:
-- the server entity - in case of the vehicle being located on a travelling path of the vehicle across the coverage region of the radio access network - obtaining travelling data related to the vehicle, the travelling data including a location information and a date information, the location information being related to a position of the vehicle along the travelling path of the vehicle across the coverage region, the date information indicating a date the vehicle is located on the position along the travelling path of the vehicle across the coverage region,
-- the server entity obtaining, based on the travelling data related to the travelling path of the vehicle across the coverage region, remote sensing data from the remote sensing system, wherein the remote sensing data are related to the vehicle and/or objects being detected, by the remote sensing system, within the remote sensing region during a time interval, the time interval including the date being indicated by the date information of the travelling data,
-- determining, based on the remote sensing data obtained from the remote sensing system, the real-time navigation data for enhancing the security of navigating the vehicle,
-- the server entity transmitting the real-time navigation data to the vehicle, wherein the server entity is connected to an information delivery entity, the information delivery entity comprising storage means storing assistance data related to the vehicle, the assistance data being configured for increasing the safety and the ability to provide important information in advance, wherein the method comprises the further step of:
-- the server entity including the assistance data with the real-time navigation data prior to transmitting the real-time navigation data to the vehicle.

It is thereby advantageously possible according to the present invention to increase the level of security while travelling the vehicle and to improve conditions of deployment of the vehicle (especially those vehicles being unsuited for carrying an own sensing system) and to provide an advanced, but relatively cheap alternative to vehicles with an on-board sensing system (for example a radar system). Preferably, the invention is based on the use of a mobile communication network being configured to transmit - in at-least a near real-time modus - such data (i.e. navigation data including information and images) from a remote sensing system (e.g. a radar facility) to the vehicle (especially a user in the vehicle, which is at least one of an aircraft, watercraft and land vehicle). According to the present invention, real-time or near real-time relates to a time interval in dependence of, e. g., provided resolution, vehicle speed value (or vehicle speed values), travelling path (or traveling paths), proximity, weather conditions in the region of travelling, etc. to also other vehicles and is preferably in the range of preferably less than one minute, or even less than that. According to the present invention, a vehicle is at least one of an aircraft, watercraft and land vehicle, being preferably adapted to make journeys under clear or relatively good (surrounding) conditions. For example, the vehicle is a helicopter, a hot air balloon or sailing boat. According to the present invention, it is advantageously possible that a relatively small vehicle (e. g. a glider plane, a in general smaller type of helicopter or a hot air balloon) - which is typically unsuitable for carrying additional equipment such as a remote sensing system (e.g. a radar system) is provided with the navigational data. For example, due to the relatively heavy weight of such remote sensing equipment, the generation of energy is typically impossible without special provisions. According to the present invention, it is advantageously possible to avoid relatively high take-off loads, as well as a reduction of airborne agility, the number of passengers and/or in the load-size and to achieve an increase of flight-time which could be taken aboard for a flight. It is furthermore advantageously possible to provide a vehicle - which lacks an on-board sensing system or which is unsuitable for carrying an on-board sensing system - with the enhanced navigational data (e.g. including real-time radar images), but thereby avoiding any adjustments or modifications in its design, avoiding an increase of weight and cost due an on-board sensing system, avoiding further modifications of, as an example, a conventional cockpit (which would need an relatively expensive enhancement) and/or avoiding modifications to the fuselage, the rudder and/or the wings. The aforementioned advantages and features being exemplarily described for one type of a vehicle (e.g. aircraft) also apply to the other types of vehicles (watercraft and/or land vehicle), and vice versa.

According to the present invention it is preferred that a method for enhancing the security of navigating a vehicle by providing real-time navigation data to the vehicle via a mobile communication network is provided, wherein the mobile communication network comprises a radio access network, the radio access network comprising a coverage region, wherein at least one remote sensing system is connected to the mobile communication network, the at least one remote sensing system comprising a remote sensing system, the remote sensing system comprising a remote sensing region, wherein the remote sensing region at least partially overlaps with the coverage region, wherein the mobile communication network comprises a server entity, wherein the method comprises the following steps:
-- the server entity - in case of the vehicle being located on a travelling path of the vehicle across the coverage region of the radio access network - obtaining travelling data related to the vehicle, the travelling data including a location information and a date information, the location information being related to a position of the vehicle along the travelling path of the vehicle across the coverage region, the date information indicating a date the vehicle is located on the position along the travelling path of the vehicle across the coverage region,
-- the server entity obtaining, based on the travelling data related to the travelling path of the vehicle across the coverage region, remote sensing data from the remote sensing system, wherein the remote sensing data are related to the vehicle and/or objects being detected, by the remote sensing system, within the remote sensing region during a time interval, the time interval including the date being indicated by the date information of the travelling data,
-- determining, based on the remote sensing data obtained from the remote sensing system, the real-time navigation data for enhancing the security of navigating the vehicle,
-- the server entity transmitting the real-time navigation data to the vehicle, wherein the server entity is connected to an information delivery entity, the information delivery entity comprising storage means storing assistance data related to the vehicle, as, for instance, geographical protrusions and depressions along the travelling path, the assistance data being configured for increasing the safety and the ability to provide important information in advance, wherein the method comprises the further step of:
-- the server entity including the assistance data with the real-time navigation data prior to transmitting the real-time navigation data to the vehicle,
-- the server entity has an ability to set up a communication with a cloud account, which preferably holds the various parameter of, for instance, the travel and/or technical (sensory) values from, e. g., the engine(or engines) (of the vehicle).

It is thereby advantageously possible that a kind of black-box-functionality is situated (or located) not on the actual vehicle, but in a storage facility of either the mobile communication network or a third party provider which provides the appropriate cloud-service.

According to the present invention, it is preferred that the travelling data are provided to the mobile communication network via the user equipment (UE) being fitted with an antenna and a subscriber identity module (SIM). The UE is the interface between the mobile communication network and the subscriber and/or the vehicle which requests the appropriate radar images and the relevant travelling information. The UE is also the interface between for instance the engine-sensory and the cloud-account, if one is in use, for instance, as a kind of remote black-box.

According to the present invention, it is preferred that the mobile communication network consists of at least a server which is engaged in the connectivity with at least one remote sensing system and a storage equipment. All information is preferably gathered by the at least one server and stored in the storage equipment. The server designates (or assigns) the resolution and coverage of the radar images - which are intended for the vehicle and/or which are sent to the vehicle in a subsequent step - based upon traveling data - which include, for example, speed value (or speed values), travelling path (or traveling paths), proximity data and/or other data- to also other vehicles, wherein the resolution and coverage data are preferably retrieved from the data being stored in the storage equipment. These radar images are preferably enriched by additional information (which means, for example, that the additional information are added and/or assigned to the radar images), provided by third parties. From the storage equipment the appropriate information in the required granularity is extracted by a server and sent over the wireless connectivity to the requiring (i.e. requesting) and/or subscribed vehicle.

According to the present invention, it is preferred that a connectivity is established via the mobile communication networkand/or services are provisioned via the server (or servers) (being involved in establishing the connectivity) to and from a cloud provider and/or the cloud service. Any vehicle can have a cloud account being configured as a log-book on which all relevant and/or required data on travelling as well as on the vehicle (e. g. technical sensory values on for instance engine-parameter, etc.) are preferably stored. Thereby it is advantageously possible that a dedicated maintenance against wear is realized and/or that a general and remote version of a black-box for any kind of vehicle is realized.

According to the present invention, it is furthermore advantageously possible to provide a requesting entity (i.e. the vehicle) with connectivity to at least one location-based service providing entities (e.g. base transceiver stations (BTS) and/or NodeBs and/or eNodeBs and/or positioning-satellites) and to provide the requesting entity (the vehicle) with the navigation data (including at least one image) by using the mobile communication network, especially a public land mobile communication network (PLMN) such as an second generation (2G), third generation (3G) or fourth generation (4G) network and/or the interim generations and/or the future generations. Thus, it is especially advantageously possible, according to the present invention, to provide the vehicle - although lacking an inbuilt/installed radar system - with all information (especially navigation data including image information) being required to reach the same or almost the same level of security as in vehicles having an on-board sensing system.

According to the present invention, the mobile communication network preferably provides the connectivity to a cloud-account (being related to the vehicle and/or a user of the vehicle) on which (all) travelling data and/or navigation data and/or remote sensing data and/or other information are stored. Preferably, access is provided to the cloud-account for a remote entity (for example a maintenance system, especially a shipyard) for performing remote maintenance operations or for analysing the data being stored on the cloud-accounts during maintenance (for example prior to using the vehicle to avoid increased maintenance costs).

According to the present invention, the navigation data preferably include image information (e.g. at least one radar image), wherein the navigation data (i.e. including the at least one radar image) is provided to the vehicle (e.g. at least one of an aircraft, watercraft and land vehicle) lacking an on-board radar-system by using the mobile communication network. Preferably, the navigation data are transmitted to the vehicle via a user equipment being located within the vehicle. Thereby, it is advantageously possible to provide the drivers or crew of any possible kind of vehicle with an optimized set of information with regard to objects (other than the vehicle) in the vicinity of the vehicle. According to the present invention, it is especially advantageously possible that the requestor of the navigation data (i.e. the vehicle) is provided with the navigation data (preferably including at least one radar image being configured to provide a clear view on the vehicle's surrounding and path) even under any kind of poor visibility such that the vehicle or the users of the vehicle are warned about any kind of hindrance (e. g. a traffic jam for land-based vehicles) without using an entity such as, for example, a flight control, a shipping office, a navigation system and/or without using radio-broadcast.

According to the present invention, it is preferred that the vehicle is an aircraft, especially those with a civil registration, which moves within beam-coverage of a radio access network of the mobile communication network along the travelling path of the vehicle. For example, the vehicle is a balloon, an aeroplane, a glider or a helicopter.

According to the present invention, it is preferred that the navigation data are received, by the vehicle, by using a user equipment being located within the vehicle during reception of the navigation data, wherein the user equipment includes a subscriber identity module (SIM) with an international mobile subscriber identity (IMSI), wherein the user equipment is preferably configured to receive and/or import the radar-images for the travel (which are included with the navigation data). Thereby, it is advantageously possible to provide an overview with regard to the direction of travel, wherein a real-time scene is preferably shown, wherein the current surroundings are shown such that traffic jams or other congestions are avoided.

According to the present invention, it is preferably advantageously possible that the real-time navigation data transmitted to the vehicle include radar images being dependent on a request of the vehicle to the server entity, the request including at least one of the current location of the vehicle (i.e. three-dimensional geographic position including preferably a height information related to the height of the vehicle above sea level), the (prospective or planned) path or route of travelling, a speed information of the vehicle and objects (e.g. radar-spots of other vehicles) which may become important for the safety. Thereby, it is advantageously possible to increase the safety conditions of the vehicle, but thereby avoiding the installation and/or use of an on-board radar-installation in the vehicle and avoiding the installation or use of the according infrastructure to provide the required energy for the on-board radar-installation.

According to the present invention, it is advantageously possible to enhance the security by reducing the need for requests to a remote control entity (e. g. a flight control), thereby decreasing an amount of distractions for any flight during the night or demanding conditions for users of the vehicle.

According to an embodiment of the present invention, in case of sailing a vessel (as the vehicle), the user convenience for a user using the vessel is improved by providing the real-time navigation data. Thus, using the location-based service of the mobile communication network enables a relatively fast and precise determination of the vessel's location thereby enhancing the security for the users of the vessel. In case of using a land vehicle, at least one land-based remote sensing system is preferably used (e.g. at least one radar-system being deployed in a region on or close to the street). Thereby it is advantageously possible that existing driving-assistant systems may be replaced by street-based radar systems to enhance the vehicle's safety by providing details about the asphalt status and street quality, occurring water on the track which may cause aqua-planning.

According to the present invention, it is preferred that the cloud-account provides an automatic log-book functionality being for collecting and/or storing the travelling data of the vehicle, especially a black-box-functionality. Preferably, the cloud-account is used to store vehicle related data such as travelling data and/or measurement data (being generated by the vehicle upon measurements being performed by the vehicle using vehicle sensors). Thus in case of a failure of the vehicle (e.g. in case of an accident and/or damage of the vehicle) any kind of data-recording (e.g. of the travelling path or travelling speed) along with other vehicle-related data (e.g. operating conditions, engine-parameter or the like) provides a land-based maintenance entity with information such as to determine a cause for the accident or failure.

According to the present invention, it is preferred that the vehicle includes a storage-system for storing data related to an operating condition of the vehicle, wherein the data related to the operating condition are transmitted (using relatively short time intervals) via the mobile communication network to the cloud-account related to the vehicle, wherein the data related to the operating condition is stored in the cloud account related to the vehicle. Preferably, at least one public service entity (e.g. Joint Aviation Authorities or International Maritime Organization) is provided with access to the cloud-account of the vehicle. Thereby it is advantageously possible to reduce danger situations and avoid crashes and/or accidents.

According to the present invention it is preferred that the method comprises the further step of automatic renewal of real-time navigation data, transmitted to the vehicle, on the basis of at least one of resolution, speeds, travelling paths, distances of the vehicle and/or the objects.

Thereby, it is advantageously possible to increase the level of security while travelling the vehicle and to improve conditions of deployment of the vehicle (especially those vehicles being unsuited for carrying a remote sensing system) and to provide an advanced, but relatively cheap alternative to vehicles with an on-board sensing system (for example a radar system).

According to the present invention, it is preferred that a security enhancement of navigating the vehicle is achieved in that navigation data (especially radar-images) are delivered to the vehicle using the mobile communication network, in that (all) travelling data including the additional vehicle(or vehicles) in its proximity and additional information (such as data information related to an operating status of the vehicle) are stored in a cloud-account during the voyage and in that the service organizations are provided with access to the cloud-account related to the vehicle.

According to the present invention, the method comprises preferably the further step of requesting, by the vehicle preferably as a pre-set value or request, real-time navigation data at the mobile communication network.

According to the present invention, it is preferred that the method comprises the further step of transmitting, by the server entity, all relevant positioning and travelling data on the objects (e.g. other vehicles), which may become a hazard to the vehicle within a certain time-laps, in real-time and/or automatically updating images to the vehicle, on the basis of resolution and e. g. speeds, travelling paths and distances of the vehicle and optionally based on the travelling paths of the objects.

According to the present invention it is furthermore preferred that obtaining, by the server entity, travelling data related to the travelling path of the vehicle across the coverage region includes at least one of the following steps:
-- receiving, by the server entity from the vehicle, first geographic data, the first geographic data being detected by a geographic information system located within the vehicle,
-- determining, by the mobile communication network, second geographic data, the second geographic data being detected by a mobile tracking system of the mobile communication network,
-- calculating, on the basis of at least one of a travelling path, a position and a speed of the objects, a view with all relevant information on such objects which cross the travelling path on a certain position and eventually a height,
-- capturing of additional information to travelling paths, wherein the additional information is stored in real-time by other providers, to enhance the own information-data.

According to the present invention it is furthermore preferred that obtaining, by the server entity, travelling data related to the travelling path of the vehicle across the coverage region includes at least one of the following steps:
-- receiving, by the server entity from the vehicle, first geographic data, the first geographic data being detected by a geographic information system located within the vehicle,
-- determining, by the mobile communication network, second geographic data, the second geographic data being detected by a mobile tracking system of the mobile communication network,
-- calculating, on the basis of at least one of a travelling path, a position and a speed of the objects, a view with all relevant information on such objects which cross the travelling path on a certain position and eventually a height, a given interval on renewal of an image, wherein the interval can be changed as for instance speed, proximity to other vehicle(-s), weather conditions, terrain changes, etc. may require the alteration on the interval,
-- capturing of additional information to travelling paths, wherein the additional information is stored in real-time by other providers, to enhance the own information-data.

Thereby, it is advantageously possible to increase the level of security while travelling the vehicle and to improve conditions of deployment of the vehicle (especially those vehicles being unsuited for carrying a remote sensing system) and to provide an advanced, but relatively cheap alternative to vehicles with an on-board sensing system (for example a radar system).

According to the present invention, it is preferred that the method comprises the further step of:
-- determining (especially additionally or alternatively to determining the first geographic information), based on the remote sensing data obtained from the mobile communication network, a localization of the vehicle (wherein mobile network-localization preferably comprises multilateration of radio signals between several base station entities of the mobile communication network and the user equipment) in which the subscriber identity module (SIM) is successfully logged-in. Preferably, redundancy is used as soon as a more precise positioning method (e.g. GPS) is unavailable.

According to the present invention, the travelling data include at least one of (three-dimensional) position data related to the position (including height) of the vehicle at a specific date, the specific date (e.g. a time-stamp) and a speed of the vehicle.

According to the present invention it is furthermore preferred that the mobile communication network comprises first storage means for storing the remote sensing data of the remote sensing system, wherein the method further comprises the following steps:
-- the remote sensing system providing updates of remote sensing data to the first storage means,
-- the server entity obtaining, based on the travelling data related to the travelling path, of the vehicle across the coverage region, the updates of remote sensing data from the first storage means.

Thereby, it is advantageously possible to increase the level of security while travelling the vehicle and to improve conditions of deployment of the vehicle (especially those vehicles being unsuited for carrying a remote sensing system) and to provide an advanced, but relatively cheap alternative to vehicles with an on-board sensing system (for example a radar system).

According to the present invention it is furthermore preferred that the real-time navigation data for enhancing the security of navigating the vehicle are determined by the server entity and/or by the remote sensing system.

Thereby, it is advantageously possible to increase the level of security while travelling the vehicle and to improve conditions of deployment of the vehicle (especially those vehicles being unsuited for carrying a remote sensing system) and to provide an advanced, but relatively cheap alternative to vehicles with an on-board sensing system (for example a radar system).

According to the present invention it is furthermore preferred that the real-time navigation data are obtained by generating an optimized set of remote sensing data, wherein the optimized set of remote sensing data is generated by at least one of the following steps:
-- only including, with the real-time navigation data - which are transferred to the mobile communication network or provided by the mobile communication network -, a subset of the remote sensing data being related to a subset of the objects, the subset of the objects being associated with positions of the objects within a predetermined vicinity of the travelling path of the vehicle across the coverage region,
-- only including, with the real-time navigation data, a subset of the remote sensing data being related to objects being detected within time intervals separated by a predetermined time span, wherein the time span is preferably determined and dependent on the basis of coverage within a transferred image, a travelling path and speed of the vehicle and the objects,
-- only including, with the real-time navigation data, a subset of the remote sensing data according to a subscriber profile information related to a user of the vehicle, wherein the subscriber profile information are stored within second storage means of the mobile communication network,
wherein the method preferably comprises the further step of:
-- reduction an image resolution associated with image information of the real-time navigation data based on at least one of a position, a geographic uniqueness, a speed and an altitude of the vehicle and/or objects in the requestor's proximity.

Thereby, it is advantageously possible to increase the level of security while travelling the vehicle and to improve conditions of deployment of the vehicle (especially those vehicles being unsuited for carrying a remote sensing system) and to provide an advanced, but relatively cheap alternative to vehicles with an on-board sensing system (for example a radar system).

According to the present invention it is furthermore preferred that the server entity determines, based on the remote sensing data obtained from the remote sensing system, an identifier for unique identification of the real-time navigation data, wherein the identifier and the real-time navigation data are stored in third storage means of the mobile communication network, wherein the identifier is transmitted to the vehicle.

Thereby, it is advantageously possible to increase the level of security while travelling the vehicle and to improve conditions of deployment of the vehicle (especially those vehicles being unsuited for carrying a remote sensing system) and to provide an advanced, but relatively cheap alternative to vehicles with an on-board sensing system (for example a radar system).

According to the present invention it is furthermore preferred that the vehicle - while travelling along the travelling path - transmits the identifier for unique identification of the real-time navigation data to fourth storage means of the mobile communication network, wherein the vehicle transmits to the fourth storage means
-- only the identifier,
-- or the identifier and vehicle information related to an operating status of the vehicle while travelling along the travelling path,
wherein the fourth storage means are preferably provided by a cloud service provider of the mobile communication network.

Thereby, it is advantageously possible to increase the level of security while travelling the vehicle and to improve conditions of deployment of the vehicle (especially those vehicles being unsuited for carrying a remote sensing system) and to provide an advanced, but relatively cheap alternative to vehicles with an on-board sensing system (for example a radar system).

According to the present invention, it is preferred that the cloud-account (which is preferably uniquely related to the vehicle) is used to store all data related to, both, the voyage and the sensors of the vehicle. Thereby, it is advantageously possible to improve diagnostic- and maintenance-times, life-time of the equipment, as well as avoid future damage during a travel.

According to the present invention it is furthermore preferred that the real-time navigation data comprise real-time image information related to the date and position of the vehicle along the travelling path across the coverage region of the radio access network, wherein the method comprises the further steps of:
-- displaying, by display means located within the vehicle, the real-time image information upon reception of the real-time navigation data from the server entity, wherein the real-time image information preferably include two-dimensional or three-dimensional information related to the vehicle and/or objects being detected, by the remote sensing system, within the remote sensing region during the time interval, wherein the real-time image information preferably include at least one of position data, velocity data and meta data related to the vehicle and/or objects being detected, by the remote sensing system, within the remote sensing region during the time interval.

Thereby, it is advantageously possible to increase the level of security while travelling the vehicle and to improve conditions of deployment of the vehicle (especially those vehicles being unsuited for carrying a remote sensing system) and to provide an advanced, but relatively cheap alternative to vehicles with an on-board sensing system (for example a radar system).

Furthermore, the present invention relates to a system for enhancing the security of navigating a vehicle by providing real-time navigation data to the vehicle via a mobile communication network, wherein the system comprises the mobile communication network and at least one remote sensing system, wherein the mobile communication network comprises a radio access network, the radio access network comprising a coverage region, wherein the at least one remote sensing system is connected to the mobile communication network, the at least one remote sensing system comprising a remote sensing system, the remote sensing system comprising a remote sensing region, wherein the remote sensing region at least partially overlaps with the coverage region, wherein the mobile communication network comprises a server entity, wherein the server entity is configured to obtain - in case of the vehicle being located on a travelling path of the vehicle across the coverage region of the radio access network - travelling data related to the vehicle, the travelling data including a location information and a date information, the location information being related to a position of the vehicle along the travelling path of the vehicle across the coverage region, the date information indicating a date the vehicle is located on the position along the travelling path of the vehicle across the coverage region, wherein the server entity is configured to obtain, based on the travelling data related to the travelling path of the vehicle across the coverage region, remote sensing data from the remote sensing system, wherein the remote sensing data are related to the vehicle and/or objects being detected, by the remote sensing system, within the remote sensing region during a time interval, the time interval including the date being indicated by the date information of the travelling data, wherein the system is configured to determine, based on the remote sensing data obtained from the remote sensing system, the real-time navigation data for enhancing the security of navigating the vehicle, wherein the server entity is configured to transmit the real-time navigation data to the vehicle,
wherein the server entity is connected to an information delivery entity, the information delivery entity comprising storage means storing assistance data related to the vehicle, the assistance data being configured for increasing the safety and the ability to provide important information in advance, wherein the server entity is configured to include the assistance data with the real-time navigation data prior to transmitting the real-time navigation data to the vehicle.

Thereby, it is advantageously possible to provide a system that provides the advantages of the inventive method.

According to the present invention, a system is provided which avoids expensive changes or even re-builds of existing vehicles (especially for an aircraft, watercraft and/or land vehicle), but still provides the user (e. g. captain, drivers and/or pilot) with abilities to fully enhance an overview of all objects in the travelling direction.

According to the present invention, it is preferred that the method is a method for enhancing the security of navigating a vehicle by providing real-time navigation data - under any condition - to the vehicle via a mobile communication network and that the system is a system for enhancing the security of navigating a vehicle by providing real-time navigation data - under any condition - to the vehicle via a mobile communication network

According to the present invention it is preferred that the server entity is configured to receive, from the vehicle, first geographic data, the first geographic data being detected by a geographic information system located within the vehicle, wherein the mobile communication network is configured to determine second geographic data, the second geographic data being detected by a mobile tracking system of the mobile communication network.

Thereby, it is advantageously possible to increase the level of security while travelling the vehicle and to improve conditions of deployment of the vehicle (especially those vehicles being unsuited for carrying a remote sensing system) and to provide an advanced, but relatively cheap alternative to vehicles with an on-board sensing system (for example a radar system).

According to the present invention it is furthermore preferred that the server entity is configured to determine, based on the remote sensing data obtained from the remote sensing system, an identifier for unique identification of the real-time navigation data, wherein the system is configured to store the identifier and the real-time navigation data in third storage means of the mobile communication network, wherein the system is configured to transmit the identifier to the vehicle.

Thereby, it is advantageously possible to increase the level of security while travelling the vehicle and to improve conditions of deployment of the vehicle (especially those vehicles being unsuited for carrying a remote sensing system) and to provide an advanced, but relatively cheap alternative to vehicles with an on-board sensing system (for example a radar system).

According to the present invention it is furthermore preferred that the system is configured to receive from the vehicle - while the vehicle is travelling along the travelling path - either only the identifier for unique identification of the real-time navigation data or identifier for unique identification of the real-time navigation data together with vehicle information related to an operating status of the vehicle while travelling along the travelling path.

Thereby, it is advantageously possible to increase the level of security while travelling the vehicle and to improve conditions of deployment of the vehicle (especially those vehicles being unsuited for carrying a remote sensing system) and to provide an advanced, but relatively cheap alternative to vehicles with an on-board sensing system (for example a radar system).

Additionally, the present invention relates to a program and a computer program product according to appended claims 14 and 15.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrates a method for enhancing the security of navigating a vehicle by providing real-time navigation data to the vehicle via a mobile communication network mobile communication network.
**Figure 2** schematically illustrates a system for enhancing the security of navigating an aircraft by providing real-time navigation data to the aircraft via a mobile communication network mobile communication network.
**Figures 3, 4 and 5** schematically illustrate the determination of a height of a vehicle using at least two antennas of the mobile communication network.
**Figures 6 and 7** schematically illustrate the generation of a three-dimensional radar image according to the present invention.
**Figures 8 and 9** schematically illustrate radar images according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

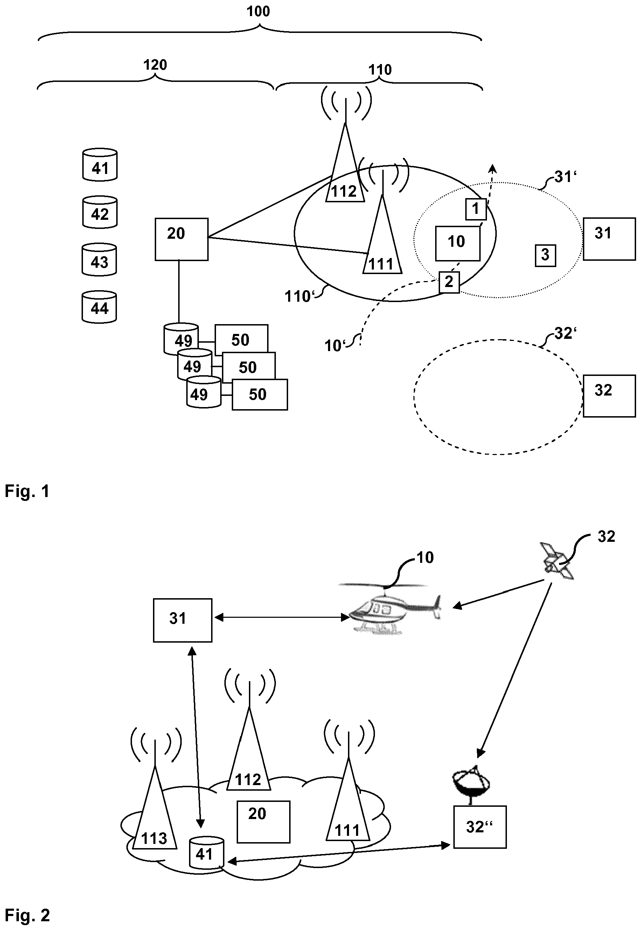

In Figure 1, a method for enhancing the security of navigating a vehicle 10 by providing real-time navigation data to the vehicle 10 via a mobile communication network 100 is illustrated schematically. The mobile communication network 100 comprises a radio access network 110 and a core network 120. The mobile communication network 100 is preferably a cellular telecommunications network comprising typically a plurality of network cells, wherein a coverage region (or coverage area) of a network cell associated with a base station entity 111 is represented in Figure 1 by means of reference sign 110'. The radio access network 110 comprises a base station entity 111 serving the radio cell associated with the coverage region 110'.

According to the present invention, at least one remote sensing system 31, 32 is connected to the mobile communication network 100, wherein the at least one remote sensing system 31, 32 comprises a remote sensing system 31. Here, the at least one remote sensing system 31, 32 also includes a further remote sensing system 32. The remote sensing system 31 comprises a remote sensing region 31' and the further remote sensing system 32 comprises a further remote sensing region 32'. The remote sensing region 31' at least partially overlaps with the coverage region 110' associated with the base station entity 111. Here, however, the further remote sensing region 32' is separate from the coverage region 110' associated with the base station entity 111 (such that the vehicle 10 - while being located within the coverage region 110' associated with the base station entity 111 is undetectable by the further remote sensing system 32 - and - while being located within the further remote sensing region 32' is out of coverage of the coverage region 110' associated with the base station entity 111. Here, a further base station entity 112 associated with a further coverage region (not shown) is illustrated by means of reference numeral 112.

According to the present invention it is preferred that the at least one remote sensing system 31, 32 comprises at least one of a terrestrial remote sensing system 31 and a satellite based remote sensing system 32. Preferably, the at least one remote sensing system 31, 32 comprises a radar system 31, wherein the remote sensing data are radar data obtained by radar measurement performed by the radar system 31.

According to the present invention, the mobile communication network 100 comprises a server entity 20 being configured to perform the (respective) steps of the inventive method.

In a first step of the inventive method, the server entity 20 - in case of the vehicle 10 being located on a travelling path 10' of the vehicle 10 across the coverage region 110' of the radio access network 110 - obtains travelling data related to the vehicle 10. The travelling data include a location information and a date information, wherein the location information is related to a position of the vehicle 10 (on the travelling path 10' of the vehicle 10 across the coverage region 10'). The date information is configured to indicate a date when the vehicle 10 is located on the position (along the travelling path 10' of the vehicle 10 across the coverage region 10').

In a second step of the inventive method, the server entity 20 obtains, based on the travelling data (related to the travelling path 10' of the vehicle 10 across the coverage region 110'), remote sensing data from the remote sensing system 31. The remote sensing data are related to the vehicle 10. Additionally or alternatively, the remote sensing data are related to (other) objects 1, 2, 3 (e.g. other vehicles other than the vehicle 10). According to the present invention, it is preferred that the remote sensing data are generated by the remote sensing system 31 upon detection of the vehicle 10 and/or the objects 1, 2, 3 within the remote sensing region 31' during a time interval, wherein the time interval includes the date being indicated by the date information of the travelling data. This means, in particular, that the remote sensing data are related to the date which is indicated by the date information being included in a request from the vehicle 10 to the server entity 20 in the first step.

In a third step of the inventive method, the server entity 20 (or alternatively the remote sensing system 31) determines, based on the remote sensing data obtained from the remote sensing system 31, the real-time navigation data (for enhancing the security of navigating the vehicle 10).

In a fourth step of the inventive method, the server entity 20 transmits the real-time navigation data to the vehicle 10.

It is especially preferred according to the present invention that the server entity 20 is connected to an information delivery entity 50, wherein the information delivery entity 50 comprises storage means 49 for storing assistance data related to the vehicle 10. The assistance data are preferably configured to increase the safety and ability to provide important information in advance (i.e. prior to the vehicle 10 arriving at objects 1 along the travelling path 10' in a travelling direction). Thus, the server entity 20 includes the assistance data with the real-time navigation data prior to transmitting the real-time navigation data to the vehicle 10.

The method enables at least one user of vehicle 10 (including at least one of aircraft, watercraft and land vehicle) to travel with an enhanced safety from a point-of-start to a destination (along the travelling path 10') (under all conditions - especially under poor visibility conditions) without having to modify or change the structural components of the vehicle prior to the travel and without the need to request a service from a radio station which may provide traffic information.

Preferably, the first step of the inventive method comprises:
-- a user equipment (located within the vehicle 10) logging on and/or activating the service for enhancing the security of navigating the vehicle 10 (provided by the inventive method via the server entity 20) by transmitting a service request including location information to the server entity 20 of the mobile communication network 100.

Preferably, the second step of the inventive method comprises:
-- the server entity 20 requesting (real-time) remote sensing data (including real-time radar images) from the remote sensing system 31 (especially from a terrestrial radar system or from a further server entity (not shown) associated with the terrestrial radar system), wherein the remote sensing data are related to the travelling path 10' of the vehicle 10 (which comprises the user equipment having a subscriber identity module (SIM) and/or the user equipment being logged-in by using the SIM for the service).

Preferably, the third step of the inventive method is performed upon reception, by the server entity 20, of the remote sensing data from the remote sensing system 31 (i.e. the radar system 31 or the radar system's further server entity) and comprises determining the navigation data in dependence of the received remote sensing data, wherein determining the navigation data preferably includes calculating of an image slice and/or frame frequency by the server entity 20. Alternatively, the step of determining the navigation data is performed by the further server entity upon reception of travelling data (including location and optionally height information related to the position of the vehicle 10 along the travelling path 10'). Preferably, the server entity 20 or the further server entity calculate, based on location, height, travelling direction and speed, which image is to be transmitted via the server entity to the requestor (i.e. the vehicle 10).

Preferably, the fourth step of the inventive method comprises:
-- the server entity 20 transmitting the navigation data (including the respective images for subscribers being determined based on the travelling data (received from the requestor - i.e. the user equipment and/or the vehicle 10) to the vehicle 10.

Preferably, the inventive method includes a fifth step, wherein the user equipment located within the vehicle 10 or on-board display means of the vehicle 10 and/or other display means located within the vehicle 10 display (by means of three-dimensional rendition) the image information included with the navigation data (such that a three-dimensional image is displayed on the user equipment and/or the display means).

According to the present invention, it is preferred that a mobile user equipment being connected to the (cellular) mobile communication network requests a service at the server entity 20, to receive real-time radar images in a reduced geographical section corresponding to the geographical location (direction and especially height) of the vehicle 10, speed of travelling of the vehicle 10, height of the vehicle 10 (i.e. height above sea level), as well as possible angle of elevation (incline) or descent of the vehicle 10. Preferably, additional optional parameters are defined by the user of the vehicle 10 or- alternatively - automatically (e.g. by the mobile communication network 100) when a transportation control service (related to or provided by the inventive method) is registered for the first time at the mobile communication network 100.

According to the present invention, it is preferred that the objects 1, 2, 3 which cross the prospective or planned travelling path 10' (or planned route 10') of the vehicle 10 are included with the navigation data. The navigation data further include an image frame frequency related to the vehicle's 10 velocity and direction, as well as related to other parameter. Preferably, upon registering for the first time for the service (being provided by the inventive method via the mobile communication network 100), a standard security policy is automatically set by the server entity 20, wherein the standard security policy includes a predetermined image frame frequency and geographical image slice. Alternatively, a user defined security policy is used.

According to the present invention, the remote sensing system 31 comprises a terrestrial radar system 31 being connected to the server entity 20, wherein the radar system 31 is configured to provide the transportation control service. Preferably, the remote sensing system 31 comprises a further server entity (not shown), the further server entity being configured to extract image information (e.g. by extracting) from the remote sensing data in dependence of profile information (related to a subscriber of the user equipment which is the user of the vehicle 10) from a home location register (HLR) (second storage means 42) of the mobile communication network 100 and/or in dependence of travelling data.

According to the present invention, the server entity 20 enhances or replaces a previous image information (associated with a first image being received, by the server entity 20, from the radar system 31) with new image information (associated with a subsequent second image being received, by the server entity 20, from the radar system 31) upon change of remote sensing data related to the objects 1, 2, 3 and/or the vehicle 10. In particular, the image information is thereby updated upon entry or exit of an object 1, 2, 3 into or out of a sphere or in dependence of a threshold-value.

According to the present invention, it is preferred that an image is transferred from the vehicle 10 to the fourth storage means 44 (comprising the cloud-account for use as a logbook and black-box-system) in that only an identifier is transferred, from the vehicle 10, to the fourth storage means 44 (i.e. to the cloud-account of the user using the vehicle 10). Preferably, upon reception of the identifier from the vehicle 10, the a server entity (not shown) associated with the fourth storage means 44 requests the navigation data (preferably image information, e.g. a radar image, uniquely related to the identifier) at third storage means 43 and stores the navigation data (in particular the image information in the fourth storage means 44 (in particular in the cloud account of the user using the vehicle 10). Thereby, it is advantageously possible that all relevant data (i.e. navigation data including radar images as well as data related to an operating status of the vehicle 10) is made available to the public service entities, maintenance entities and/or to the subscriber (the user which uses the vehicle 10). For example, the data related to the operating status of the vehicle 10 include at least one of engine-data, aerial-data, rudder-data and friction-specific data.

In Figure 2, a system for enhancing the security of navigating an aircraft by providing real-time navigation data to the aircraft via a mobile communication network mobile communication network is schematically illustrated. Here, the further remote sensing system 32 is a satellite-based remote sensing system 32 including a terrestrial base station entity 32" being connected to the mobile communication system 100.

Preferably, the coverage region 110' (herein also called coverage area) is a three-dimensional region or space of the (radio access network associated with a base station entity of the) mobile communication network 100, wherein the coverage region 110' provides coverage to subscribers (especially in an helicopter 10) up to a certain ceiling (vertical direction) and out of the coast (horizontal direction). Preferably, the mobile communication network 100 is connected to a flight control entity which operates a remote sensing system 31 (e.g. a radar system or radar station), the remote sensing system 31 being associated with a remote sensing region (see reference numeral 31' in Figure 1) at least partially overlapping (preferably fully overlapping with or including the) any coverage region (for example coverage region 110' shown in Figure 1) of the mobile communication network 100. Preferably, the mobile communication network 100 is connected to all shipping offices with their respective radar-installations in harbours and on coasts and associated shipping-routes. Preferably, the system according to the present invention comprises a radar-installation for automotive corridors (for example highways) and traffic control entities (not shown). Thereby, it is advantageously possible to avoid failing night-vision ability, darkness, fog, poor visibility and other pre-sets for an unsafe voyage from becoming critical due to a real-time modus being realized by supplying the vehicle with the real-time navigation data (including radar-images), wherein the image information are displayed during travelling the vehicle 10.

In Figure 2, an exemplary embodiment of the system according to the present invention is shown, wherein navigation data (including image information such as radar-images) are transmitted to the vehicle 10 - here an aircraft 10, especially a helicopter 10 - which is flying along the travel path 10' (cf. Figure 1).

The base station entities 111, 112, 113 of the mobile communication network are used to determine a position (including location information and/or height information) of the vehicle 10. The mobile communication network 100 is connected to the helicopter 100 via at least one base station entity 111, 112, 113, as well as with flight controlling instances including a radar systems 31.

The helicopter 10 includes the travelling data (which comprise the position of the helicopter 10 in the air-space) with a request being transmitted to the server entity 20 of the mobile communication network 100. The server entity 20 forwards the request to a dedicated radar system 31 which is configured to detect objects in the air-space being used by the helicopter 10 (i.e. a radar system 31 with an associated radar region (or remote sensing region) 31' which at least partially overlaps with the air-space, but which at least includes the vehicle 10). Preferably, the radar system 31 updates a database 41 of the mobile communication network 100 with radar images, wherein the updates of the radar images are stored in the database 41 upon changes being detected within the remote sensing region 31'.

According to an embodiment of the present invention, the mobile communication network 100 is configured to adjust the remote sensing data such that the image information included with the navigation data are configured for (near) real-time transmission and (near) real-time display (e.g. by downscaling and resizing the images) of the image information on display means (of a user equipment) located within the helicopter 10. Thereby, it is advantageously possible that a pilot of the helicopter 10 is enabled to view surrounding traffic at relevant heights and locations on the display means (of his user equipment), wherein the image information is preferably aligned with the current travelling direction of the helicopter 10. Thereby, it is advantageously possible that the vehicle 10 - although lacking an inbuilt/installed radar system - is provided with all necessary information (especially image information included with the navigation data) such that substantially the same level of security is realized as in radar-equipped vehicles.

According to the present invention, it is preferred that connectivity of the vehicle 10 with the mobile communication network 100 is provided. Preferably, the strongest signalling connectivity ensures the initial signal-provision from a base station entity 111 to the antenna of the user equipment within or at the outside of the exemplary aircraft 10. Preferably, the system according to the present invention is configured to employ a handover mechanism, wherein a base station entity 111 remains the dedicated base station entity 111 associated with the aircraft 11 (with the associated cell-ID) until a signalling strength of the dedicated base station entity 111 reaches about 5 percent under the next logical base station entity 112 having a different cell-ID. Thereby, it is advantageously possible that the aircraft 10 may divert its flight path and may again reach the coverage region 110' of either the currently assigned base station entity 111 or even a still further base station entity 113. This information is preferably handled by an application part of the base station entities 111, 112, 113. Preferably, a horizontal- and a vertical threshold is used, by the radio network controller (RNC), for the location and thus changes the handover for an airborne or waterborne vehicle accordingly. According to the present invention, preferably an altered signalling strength of about 5 % under the next logical base station entity 112 with the different cell-ID is realized such that a less computational complexity is preferably reached within the mobile communication network 100 (for a handover), which is especially advantageous under stormy circumstances - both in air- and waterborne situations. Preferably, the amount of handovers for the vehicles 10 is thereby kept relatively low (as compared to standard land-based implementations).

According to the present invention, the user of the vehicle 10 and/or subscriber of the user equipment located in the vehicle (e.g. pilots, co-pilots and airborne engineers) are provided with a dedicated IMSI-range for airborne situations. Thus, the dedicated IMSI-ranges for airborne vehicles, improve the security for pilots which are flying at an appropriate low altitude or have to land their aircraft (e. g. a hot air balloon) on a field. The same applies to waterborne situations accordingly.

According to the present invention, it is preferred that the vehicle 10 transmits, to the mobile communication network 100, accumulated data related to the vehicle 10 during travelling along the travelling path 10', wherein the accumulated data comprise, for example, at least one of date, time, speed, current position (including especially height), direction of travel, position of aerials and/or rudder, propulsion data, engine data, vocal-communications (e.g. voice call transmissions) and the received radar images. The accumulated data are preferably accumulated over a predetermined time interval, wherein the accumulated data are preferably transmitted to the mobile communication network 100 using a burst mode. The before mentioned radar-system could be coupled with a recognition system on an optical basis being configured for automatically recognizing objects being displayed in the image.

According to the present invention, the display means are located in the vehicle, wherein the display means include at least one of a tablet computer, a pad a user equipment, wherein the display means is preferably installed (fixed or removable) in the cockpit, on or in a dash-board or even included with an instrumentation panel of the vehicle 10.

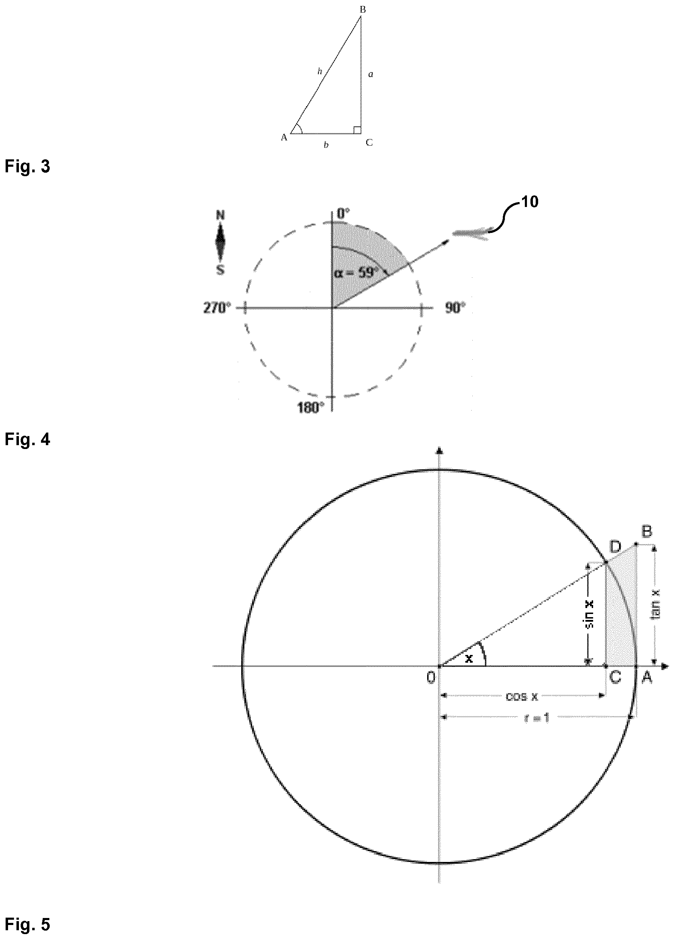

In Figures 3, 4 and 5 the determination of a height of a vehicle using at least two antennas of the mobile communication network is illustrated schematically. According to the present invention, it is preferred that a geographic location of the vehicle 10 is detected by the mobile communication network 100. Preferably, the server entity 20 receives, via the mobile communication network 100, a (one time) service (activation) request from the vehicle 10 (especially from a user equipment located in the vehicle 10). Preferably, the travelling data include location information (related to a position of the vehicle 10 on the travelling path 10') obtained by a geographic information system (e.g. global positioning system - GPS) located within the vehicle 10 and/or by a mobile location based service.

In Figure 3, a triangle is shown to illustrate the determination of a location of the vehicle 10. According to the present invention, it is preferred that the vehicle 10 travels, along the travel path 10' (see Figure 1), (especially an aircraft flying along the travel path) within coverage of at least two base station entities 111, 112, 113 of the mobile communication network 100 such as to enable the determination of, both, location and height (position) of the vehicle 10 by capturing the position by using the at least two base station entities 111, 112, 113 of the mobile communication network 100, wherein the at least two base station entities 111, 112, 113 preferably include at least one of a base transceiver station (BTS) and NodeB. The height (illustrated by the line between points B and C in Figure 3) is determined by measuring a time delay being related to a total length of the tangent or hypotenuse denoted by "h" in Figure 3 (illustrated by the line between points A and B in Figure 3) with respect to a distance between each of the at least two base station entities 111, 112, 113 -which is denoted by "b" in Figure 3 (cf. the line between points A and C in Figure 3). The length of the distance "h" is preferably calculated using a trigonometric formula.

In Figure 4, the determination of a height of a vehicle using at least two antennas of the mobile communication network is illustrated schematically, wherein a global positioning system (GPS) of the vehicle 10 is used.

In Figure 5, the determination of a height of a vehicle using at least two antennas of the mobile communication network is illustrated schematically, wherein the location information is determined using a mobile location based service, wherein the trigonometrical calculation includes using the horizontal position (illustrated by the line between points 0 and C in Figure 5), the cosine of the relevant angle (illustrated by "x" in Figure 5) and the height of the vehicle 10 (illustrated by the line between points C and D.

Preferably, a velocity of the vehicle 10 is obtained, based on remote sensing data obtained from the radar system 31 and/or based on a calculation using the location information included with the travelling data (i.e. using the geographic location coordinates using the GPS of the vehicle 10) and/or based on a velocity measurement performed by the vehicle 10 (which is subsequently transmitted directly from the vehicle 10 to the server entity 20).

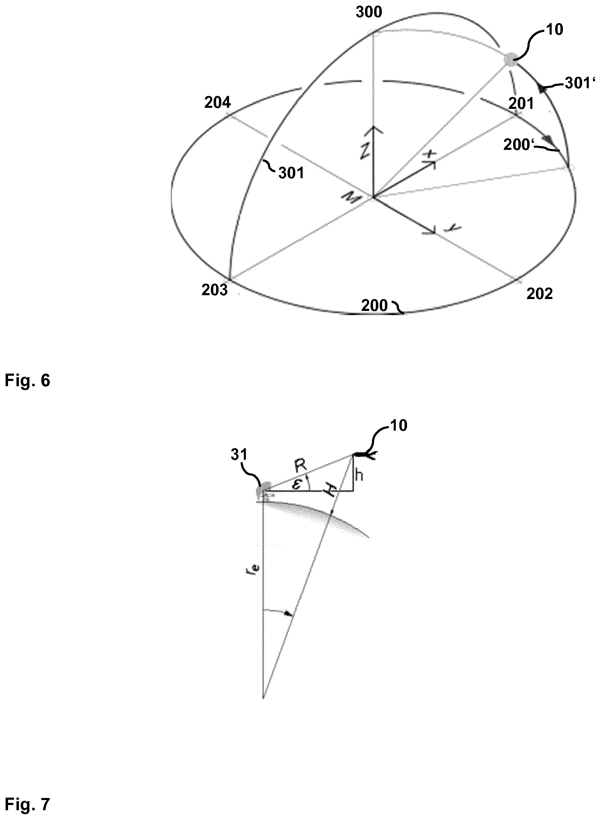

In Figures 6 and 7 the generation of a three-dimensional radar image according to the present invention is illustrated schematically. Here, the image frame frequency is calculated based on the velocity of the vehicle 10 (in particular proportional to a mobile communication device or user equipment located in the vehicle 10). Optionally, other objects 1, 2, 3 on a travelling path 10' of the vehicle 10 (which may cross the travelling path 10' of the vehicle 10) are added to a radar image included with the navigation data transmitted to the vehicle 10. A geographical slice of a two-dimensional radar image is calculated in based on a standard security weighting or based on optional parameters. Preferably, a section of the radar image being sent to the vehicle (in particular to the user equipment located within the vehicle 10) is determined based on the travelling parameter (which include at least one of location information, speed information, height information, direction information and information related to the travelling path 10'). Thereby, it is advantageously possible to reduce the radar image to a relevant section such that an easily transferrable datagram-size is realized thereby reducing the costs in sending the reduced radar image to the vehicle 10.

In Figure 6, a northern direction is illustrated by reference numeral 201, a wester direction is illustrated by reference numeral 202, a southern direction is illustrated by reference numeral 203 and an eastern direction is illustrated by reference numeral 204. Reference numeral 300 denotes the zenith, reference numeral 301 denotes the meridian, reference numeral 200 denotes the horizon, reference numeral 200' denotes the azimuth associated with the vehicle 10 and reference numeral 301' denotes the height associated with the vehicle 10.

According to the present invention, it is preferred that a three-dimensional radar image is displayed (and/or updated) by display means located within the vehicle 10 upon reception of the navigation data. Preferably, the radar image includes a range information (which is herein also called "range (x)"), wherein the range information is a measure of the "line-of-sight" distance from the radar system 31 to the detected object 1, 2, 3 or to the detected vehicle 10. The radar system 31 is configured to detect the range to the vehicle 10 or to the object 1, 2, 3, by measuring the time being required by a radar pulse to travel from the radar system 31 to the respective vehicle 10 or object 1, 2 ,3 and back (i.e. until an echo from the target is received). Thereby, a range resolution is determined based on the transmitted pulse width. Another dimension is herein called "azimuth (y)" and is perpendicular to "range (x)".

In Figure 7, the generation of a three-dimensional radar image according to the present invention is illustrated schematically, wherein the height (denoted by "h" in Figure 7) of the vehicle 10 (here an aircraft) is measured by radar-reflection, wherein a position of, both, radar-station and the detected vehicle 10 as well as the angle relative to the horizontal direction is used, as shown in Figure 7.

According to the present invention, it is preferred that a three-dimensional image is generated using a computer, wherein a height-difference is calculated and displayed by the image. Alternatively, imaging laser radar sensor technology is used.

According to an embodiment of the present invention, more than one radar-system is used, wherein a cross-section of the calculated radar-images from the respective more than one radar system with their relevant height determination is used to calculate a three-dimensional-image (for example of a flight path of an aircraft 10 - cf. Figure 2).

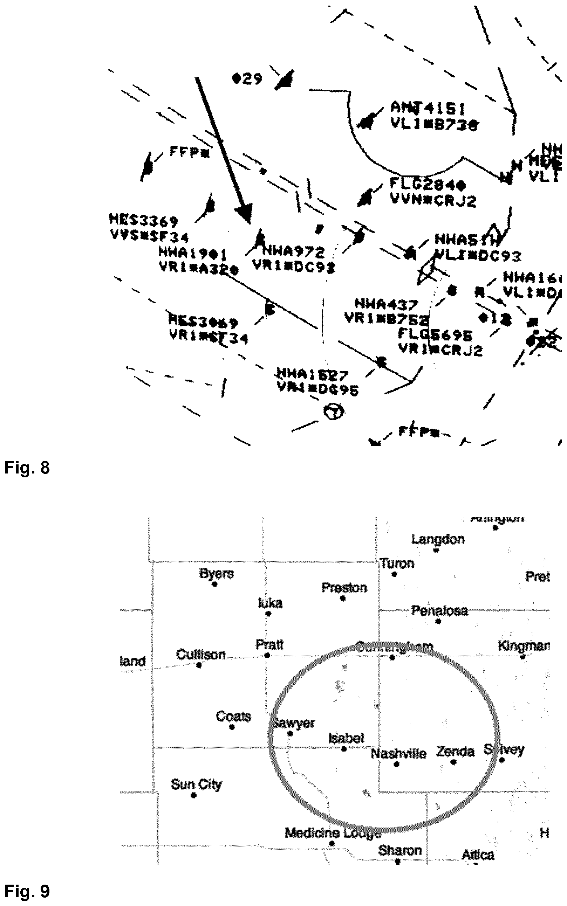

In Figures 8 and 9 radar images according to the present invention are illustrated schematically. Preferably, an adequate size of the image associated with the image information of the navigation data is calculated prior to a transfer of the image to the vehicle 10 (in particular to the user equipment located within the vehicle 10).

An optional security weighting corresponds to a radar section view, the image information being related to a radar section view, wherein the image information is generated depending on at least one of the travelling data related to the vehicle 10 and further travelling data related to objects 1, 2, 3 (especially other vehicles 10 or other entities). In Figures 8 and 9, two exemplary radar images (according to image information included with the navigation data) are shown. Here, a flight control radar-system provides a two-dimensional radar image of an aircraft above a certain altitude in the area by a flight control radar system 31 in the Midwest of the United States of America corresponding to the circle depicted in Figure 9. The distance between Sawyer and Zenda in the United States of America is about 768 miles in a straight line.

According to the present invention, it is preferred that an image frame frequency is adapted, by the server entity 20, based on the travel data of the vehicle 10. Preferably, an update of the navigation data is only transmitted to the vehicle 10 upon detection of an update of remote sensing data from the remote sensing system 31. Preferably, the image information are linked to visual images available on the internet. Thereby, it is advantageously possible to show on the image displayed on the display means within the vehicle objects 1, 2, 3 in the vicinity of the vehicle 10 even under poor visibility (e.g. darkness). Preferably further information are displayed on the image, for example a specific icon for a maintenance-provision and/or fuel-provider.

According to the present invention, it is preferred that a billing mechanism, being based on a quantity of time and data of service usage, is provided by the mobile communication network 100.

According to the present invention, it is preferred that the amount of navigation data transmitted to the vehicle 10 is reduced - in case of a connection failure of a connection between the vehicle 10 and the mobile communication network 100 - such that either a solution is adopted, as under smaller available bandwidth to the subscriber, which can be easily transferred, but may not have all details as under a good-or normal provision of such data, or such that the mobile communication network 100 nodes recognize the (new) location of the re-booked subscriber (which is located within the vehicle 10) and instantly provide the needed- and requested data to the vehicle 10.

## Claims

1. Method for enhancing the security of navigating a vehicle (10) by providing real-time navigation data to the vehicle (10) via a mobile communication network (100), wherein the mobile communication network (100) comprises a radio access network (110), the radio access network (110) comprising a coverage region (110'), wherein at least one remote sensing system (31, 32) is connected to the mobile communication network (100), the at least one remote sensing system (31, 32) comprising a remote sensing system (31), the remote sensing system (31) comprising a remote sensing region (31'), wherein the remote sensing region (31') at least partially overlaps with the coverage region (110'), wherein the mobile communication network (100) comprises a server entity (20), wherein the method comprises the following steps:
-- the server entity (20) - in case of the vehicle (10) being located on a travelling path (10') of the vehicle (10) across the coverage region (110') of the radio access network (110) - obtaining travelling data related to the vehicle (10), the travelling data including a location information and a date information, the location information being related to a position of the vehicle (10) along the travelling path (10') of the vehicle (10) across the coverage region (10'), the date information indicating a date the vehicle (10) is located on the position along the travelling path (10') of the vehicle (10) across the coverage region (10'),
-- the server entity (20) obtaining, based on the travelling data related to the travelling path (10') of the vehicle (10) across the coverage region (110'), remote sensing data from the remote sensing system (31), wherein the remote sensing data are related to the vehicle (10) and/or objects (1, 2, 3) being detected, by the remote sensing system (31), within the remote sensing region (31') during a time interval, the time interval including the date being indicated by the date information of the travelling data,
-- determining, based on the remote sensing data obtained from the remote sensing system (31), the real-time navigation data for enhancing the security of navigating the vehicle (10),
-- the server entity (20) transmitting the real-time navigation data to the vehicle (10),
wherein the server entity (20) is connected to an information delivery entity (50), the information delivery entity (50) comprising storage means (49) storing assistance data related to the vehicle (10), the assistance data being configured for increasing the safety and the ability to provide important information in advance, wherein the method comprises the further step of:
-- the server entity (20) including the assistance data with the real-time navigation data prior to transmitting the real-time navigation data to the vehicle (10),
wherein the real-time navigation data include image information, wherein the remote sensing data are generated by the remote sensing system (31) upon detection of the objects (1, 2, 3) within the remote sensing region (31') during the time interval, wherein the objects (1, 2, 3) comprise other vehicles or other entities.

2. Method according to claim 1, wherein the method comprises the further step of automatic renewal of real-time navigation data, transmitted to the vehicle (10), on the basis of at least one of resolution, speeds, travelling paths, distances of the vehicle (10) and/or the objects (1, 2, 3).

3. Method according to any one of the preceding claims, wherein obtaining, by the server entity (20), travelling data related to the travelling path (10') of the vehicle (10) across the coverage region (110') includes at least one of the following steps:
-- receiving, by the server entity (20) from the vehicle (10), first geographic data, the first geographic data being detected by a geographic information system located within the vehicle (10),
-- determining, by the mobile communication network (100), second geographic data, the second geographic data being detected by a mobile tracking system of the mobile communication network (100),
-- calculating, on the basis of at least one of a travelling path, a position and a speed of the objects (1, 2, 3), a view with all relevant information on such objects (1, 2, 3) which cross the travelling path on a certain position and eventually a height,
-- capturing of additional information to travelling paths, wherein the additional information is stored in real-time by other providers, to enhance the own information-data.

4. Method according to any one of the preceding claims, wherein the mobile communication network (100) comprises first storage means (41) for storing the remote sensing data of the remote sensing system (31), wherein the method further comprises the following steps:
-- the remote sensing system (31) providing updates of remote sensing data to the first storage means (41),
-- the server entity (20) obtaining, based on the travelling data related to the travelling path (10'), of the vehicle (10) across the coverage region (110'), the updates of remote sensing data from the first storage means (41).

5. Method according to any one of the preceding claims, wherein the real-time navigation data for enhancing the security of navigating the vehicle (10) are determined by the server entity (20) and/or by the remote sensing system (31).

6. Method according to any one of the preceding claims, wherein the real-time navigation data are obtained by generating an optimized set of remote sensing data, wherein the optimized set of remote sensing data is generated by at least one of the following steps:
-- only including, with the real-time navigation data - which are transferred to the mobile communication network (100)or provided by the mobile communication network (100) -, a subset of the remote sensing data being related to a subset of the objects (1, 2, 3), the subset of the objects (1, 2, 3) being associated with positions of the objects (1, 2, 3) within a predetermined vicinity of the travelling path (10') of the vehicle (10) across the coverage region (110'),
-- only including, with the real-time navigation data, a subset of the remote sensing data being related to objects (1, 2, 3) being detected within time intervals separated by a predetermined time span, wherein the time span is preferably determined and dependent on the basis of coverage within a transferred image, a travelling path and speed of the vehicle (10) and the objects (1, 2, 3),
-- only including, with the real-time navigation data, a subset of the remote sensing data according to a subscriber profile information related to a user of the vehicle (10), wherein the subscriber profile information are stored within second storage means (42) of the mobile communication network (100),
wherein the method preferably comprises the further step of:
-- reduction an image resolution associated with image information of the real-time navigation data based on at least one of a position, a geographic uniqueness, a speed and an altitude of the vehicle (10) and/or objects (1, 2, 3).

7. Method according to any one of the preceding claims, wherein the server entity (20) determines, based on the remote sensing data obtained from the remote sensing system (31), an identifier for unique identification of the real-time navigation data, wherein the identifier and the real-time navigation data are stored in third storage means (43) of the mobile communication network (100), wherein the identifier is transmitted to the vehicle (10).

8. Method according to any one of the preceding claims, wherein the vehicle (10) - while travelling along the travelling path (10') - transmits the identifier for unique identification of the real-time navigation data to fourth storage means (44) of the mobile communication network (100), wherein the vehicle (10) transmits to the fourth storage means (44)
-- only the identifier,
-- or the identifier and vehicle information related to an operating status of the vehicle (10) while travelling along the travelling path (10'),
wherein the fourth storage means (44) are preferably provided by a cloud service provider of the mobile communication network (100).

9. Method according to any one of the preceding claims, wherein the real-time navigation data comprise real-time image information related to the date and position of the vehicle (10) along the travelling path (10') across the coverage region (110') of the radio access network (110), wherein the method comprises the further steps of:
-- displaying, by display means located within the vehicle (10), the real-time image information upon reception of the real-time navigation data from the server entity (20), wherein the real-time image information preferably include two-dimensional or three-dimensional information related to the vehicle (10) and/or objects (1, 2, 3) being detected, by the remote sensing system (31), within the remote sensing region (31') during the time interval, wherein the real-time image information preferably include at least one of position data, velocity data and meta data related to the vehicle (10) and/or objects (1, 2, 3) being detected, by the remote sensing system (31), within the remote sensing region (31') during the time interval.

10. System for enhancing the security of navigating a vehicle (10) by providing real-time navigation data to the vehicle (10) via a mobile communication network (100), wherein the system comprises the mobile communication network (100) and at least one remote sensing system (31, 32), wherein the mobile communication network (100) comprises a radio access network (110), the radio access network (110) comprising a coverage region (110'), wherein the at least one remote sensing system (31, 32) is connected to the mobile communication network (100), the at least one remote sensing system (31, 32) comprising a remote sensing system (31), the remote sensing system (31) comprising a remote sensing region (31'), wherein the remote sensing region (31') at least partially overlaps with the coverage region (110'), wherein the mobile communication network (100) comprises a server entity (20), wherein the server entity (20) is configured to obtain - in case of the vehicle (10) being located on a travelling path (10') of the vehicle (10) across the coverage region (110') of the radio access network (110) - travelling data related to the vehicle (10), the travelling data including a location information and a date information, the location information being related to a position of the vehicle (10) along the travelling path (10') of the vehicle (10) across the coverage region (10'), the date information indicating a date the vehicle (10) is located on the position along the travelling path (10') of the vehicle (10) across the coverage region (10'), wherein the server entity (20) is configured to obtain, based on the travelling data related to the travelling path (10') of the vehicle (10) across the coverage region (110'), remote sensing data from the remote sensing system (31), wherein the remote sensing data are related to the vehicle (10) and/or objects (1, 2, 3) being detected, by the remote sensing system (31), within the remote sensing region (31') during a time interval, the time interval including the date being indicated by the date information of the travelling data, wherein the system is configured to determine, based on the remote sensing data obtained from the remote sensing system (31), the real-time navigation data for enhancing the security of navigating the vehicle (10), wherein the server entity (20) is configured to transmit the real-time navigation data to the vehicle (10),
wherein the server entity (20) is connected to an information delivery entity (50), the information delivery entity (50) comprising storage means (49) storing assistance data related to the vehicle (10), the assistance data being configured for increasing the safety and the ability to provide important information in advance, wherein the server entity (20) is configured to include the assistance data with the real-time navigation data prior to transmitting the real-time navigation data to the vehicle (10),
wherein the real-time navigation data include image information, wherein the remote sensing system (31) is configured to generate the remote sensing data upon detection of the objects (1, 2, 3) within the remote sensing region (31') during the time interval, wherein the objects (1, 2, 3) comprise other vehicles or other entities.

11. System according to claim 10, wherein the server entity (20) is configured to receive, from the vehicle (10), first geographic data, the first geographic data being detected by a geographic information system located within the vehicle (10), wherein the mobile communication network (100) is configured to determine second geographic data, the second geographic data being detected by a mobile tracking system of the mobile communication network (100).

12. System according to any one of claims 10 or 11, wherein the server entity (20) is configured to determine, based on the remote sensing data obtained from the remote sensing system (31), an identifier for unique identification of the real-time navigation data, wherein the system is configured to store the identifier and the real-time navigation data in third storage means (43) of the mobile communication network (100), wherein the system is configured to transmit the identifier to the vehicle (10).

13. System according to any one of claims 10 to 12, wherein the system is configured to receive from the vehicle (10) - while the vehicle (10) is travelling along the travelling path (10') - either only the identifier for unique identification of the real-time navigation data or identifier for unique identification of the real-time navigation data together with vehicle information related to an operating status of the vehicle (10) while travelling along the travelling path (10').

14. Program comprising a computer readable program code which, when executed on a system of computing devices of a mobile communication network (100) and a remote sensing system (31), causes the system of computing devices to perform a method according to any one of claims 1 to 9.

15. Computer program product for enhancing the security of navigating a vehicle (10) by providing real-time navigation data to the vehicle (10) via a mobile communication network (100), the computer program product comprising the computer program of claim 14 stored on a storage medium.

## Patentansprüche

1. Verfahren zum Verbessern der Sicherheit zum Navigieren eines Fahrzeugs (100), indem dem Fahrzeug (10) über ein Mobilkommunikationsnetzwerk (10) Echtzeit-Navigationsdaten bereitgestellt werden, wobei das Mobilkommunikationsnetzwerk (100) ein Funkzugangsnetzwerk (110) umfasst, wobei das Funkzugangsnetzwerk (110) einen Abdeckungsbereich (110') umfasst, wobei mindestens ein Fernerfassungssystem (31, 32) mit dem Mobilkommunikationsnetzwerk (100) verbunden ist, wobei das mindestens eine Fernerfassungssystem (31, 32) ein Fernerfassungssystem (31) umfasst, wobei das Fernerfassungssystem (31) einen Fernerfassungsbereich (31') umfasst, wobei der Fernerfassungsbereich (31') zumindest teilweise mit dem Abdeckungsbereich (110') überlappt, wobei das Mobilkommunikationsnetzwerk (100) eine Servereinheit (20) umfasst, wobei das Verfahren die folgenden Schritte umfasst:
- Erhalten durch die Servereinheit (20) - für den Fall, dass sich das Fahrzeug (10) auf einer Bewegungsbahn (10') des Fahrzeugs (10) über dem Abdeckungsbereich (110') des Funkzugangsnetzwerks (110) befindet - von Bewegungsdaten bezüglich des Fahrzeugs (10), wobei die Bewegungsdaten eine Standortinformation und eine Datumsinformation umfassen, wobei sich die Standortinformation auf eine Position des Fahrzeugs (10) entlang der Bewegungsbahn (10') des Fahrzeugs (10) über dem Abdeckungsbereich (10') bezieht, wobei die Datumsinformation ein Datum angibt, an dem sich das Fahrzeug (10) in der Position entlang der Bewegungsbahn (10') des Fahrzeugs (10) über dem Abdeckungsbereich (10') befindet,
- Erhalten durch die Servereinheit (20), basierend auf den Bewegungsdaten bezüglich der Bewegungsbahn (10') des Fahrzeugs (10) über dem Abdeckungsbereich (110'), von Fernerfassungsdaten von dem Fernerfassungssystem (31), wobei sich die Fernerfassungsdaten auf das Fahrzeug (10) und/oder Gegenstände (1, 2, 3) beziehen, die durch das Fernerfassungssystem (31) innerhalb des Fernerfassungsbereichs (31) während eines Zeitintervalls erfasst werden, wobei das Zeitintervall das Datum umfasst, das durch die Datumsinformation der Bewegungsdaten angegeben wird,
- Bestimmen, basierend auf den von dem Fernerfassungssystem (31) erhaltenen Fernerfassungsdaten, der Echtzeit-Navigationsdaten zum Verbessern der Sicherheit zum Navigieren des Fahrzeugs (10),
- Übertragen durch die Servereinheit (20) der Echtzeit-Navigationsdaten an das Fahrzeug (10),
wobei die Servereinheit (20) mit einer Informationsliefereinheit (50) verbunden ist, wobei die Informationsliefereinheit (50) Speichermittel (49) umfasst, die Hilfsdaten bezüglich des Fahrzeugs (10) speichern, wobei die Hilfsdaten zum Erhöhen der Sicherheit und der Fähigkeit, wichtige Informationen im Voraus bereitzustellen, eingerichtet sind, wobei das Verfahren den weiteren Schritt umfasst zum:
- Einbeziehen durch die Servereinheit (20) der Hilfsdaten in die Echtzeit-Navigationsdaten, bevor die Echtzeit-Navigationsdaten an das Fahrzeug (10) übertragen werden,
wobei die Echtzeit-Navigationsdaten Bildinformationen umfassen, wobei die Fernerfassungsdaten durch das Fernerfassungssystem (31) bei Erfassung der Gegenstände (1, 2, 3) innerhalb des Fernerfassungsbereichs (31') während des Zeitintervalls erzeugt werden, wobei die Gegenstände (1, 2, 3) andere Fahrzeuge oder andere Einheiten umfassen.

2. Verfahren nach Anspruch 1, wobei das Verfahren den weiteren Schritt zum automatischen Erneuern von Echtzeit-Navigationsdaten umfasst, die an das Fahrzeug (10) übertragen werden, auf der Basis von mindestens einem aus Auflösung, Geschwindigkeiten, Bewegungsbahnen, Abständen des Fahrzeugs (10) und/oder der Gegenstände (1, 2, 3).

3. Verfahren nach einem der vorhergehenden Ansprüche, wobei ein Erhalten durch die Servereinheit (20) von Bewegungsdaten bezüglich der Bewegungsbahn (10') des Fahrzeugs (10) über dem Abdeckungsbereich (110') mindestens einen der folgenden Schritte umfasst:
- Empfangen, durch die Servereinheit (20) von dem Fahrzeug (10), von ersten geografischen Daten, wobei die ersten geografischen Daten durch ein System für geografische Informationen erfasst werden, das sich innerhalb des Fahrzeugs (10) befindet,
- Bestimmen, durch das Mobilkommunikationsnetzwerk (100), von zweiten geografischen Daten, wobei die zweiten geografischen Daten durch ein mobiles Nachverfolgungssystem des Mobilkommunikationsnetzwerks (100) erfasst werden,
- Berechnen, auf der Basis von mindestens einer aus einer Bewegungsbahn, einer Position und einer Geschwindigkeit der Gegenstände (1, 2, 3), einer Ansicht mit allen relevanten Informationen über derartige Gegenstände (1, 2, 3), welche die Bewegungsbahn in einer bestimmten Position und eventuell einer Höhe kreuzen,
- Aufnehmen von zusätzlichen Informationen zu Bewegungsbahnen, wobei die zusätzlichen Informationen in Echtzeit durch andere Anbieter gespeichert werden, um die Eigeninformationsdaten zu verbessern.

4. Verfahren nach einem der vorhergehenden Ansprüche, wobei das Mobilkommunikationsnetzwerk (100) erste Speichermittel (41) zum Speichern der Fernerfassungsdaten des Fernerfassungssystems (31) umfasst, wobei das Verfahren ferner die folgenden Schritte umfasst:
- Bereitstellen durch das Fernerfassungssystem (31) an die ersten Speichermittel (41) von Aktualisierungen von Fernerfassungsdaten,
- Erhalten durch die Servereinheit (20), basierend auf den Bewegungsdaten bezüglich der Bewegungsbahn (10') des Fahrzeugs (10) über dem Abdeckungsbereich (110'), der Aktualisierungen von Fernerfassungsdaten von den ersten Speichermitteln (41).

5. Verfahren nach einem der vorhergehenden Ansprüche, wobei die Echtzeit-Navigationsdaten zum Verbessern der Sicherheit zum Navigieren des Fahrzeugs (10) durch die Servereinheit (20) und/oder durch das Fernerfassungssystem (31) bestimmt werden.

6. Verfahren nach einem der vorhergehenden Ansprüche, wobei die Echtzeit-Navigationsdaten erhalten werden, indem ein optimierter Satz Fernerfassungsdaten erzeugt wird, wobei der optimierte Satz Fernerfassungsdaten durch mindestens einen der folgenden Schritte erzeugt wird:
- nur Einbeziehen in die Echtzeit-Navigationsdaten - die an das Mobilkommunikationsnetzwerk (100) übertragen oder durch das Mobilkommunikationsnetzwerk (100) bereitgestellt werden - eines Untersatzes der Fernerfassungsdaten in Bezug auf einen Untersatz der Gegenstände (1, 2, 3), wobei der Untersatz der Gegenstände (1, 2, 3) Positionen der Gegenstände (1, 2, 3) innerhalb einer vorbestimmten Nähe der Bewegungsbahn (10') des Fahrzeugs (10) über dem Abdeckungsbereich (110') zugeordnet ist,
- nur Einbeziehen in die Echtzeit-Navigationsdaten eines Untersatzes der Fernerfassungsdaten in Bezug auf Gegenstände (1, 2, 3), die innerhalb von Zeitintervallen erfasst werden, die durch eine vorbestimmte Zeitspanne getrennt sind, wobei die Zeitspanne vorzugsweise auf der Basis einer Abdeckung innerhalb eines übertragenen Bildes, einer Bewegungsbahn und Geschwindigkeit des Fahrzeugs (10) und der Gegenstände (1, 2, 3) bestimmt wird und abhängig ist,
- nur Einbeziehen in die Echtzeit-Navigationsdaten eines Untersatzes der Fernerfassungsdaten gemäß einer Teilnehmerprofilinformation bezüglich eines Benutzers des Fahrzeugs (10), wobei die Teilnehmerprofilinformationen innerhalb zweiter Speichermittel (42) des Mobilkommunikationsnetzwerks (100) gespeichert werden,
wobei das Verfahren vorzugsweise den weiteren Schritt umfasst zum:
- Reduzieren einer Bildauflösung, die Bildinformationen der Echtzeit-Navigationsdaten zugeordnet ist, basierend auf einer Position, einer geografischen Eindeutigkeit, einer Geschwindigkeit und einer Höhe des Fahrzeugs (10) und/oder der Gegenstände (1, 2, 3).

7. Verfahren nach einem der vorhergehenden Ansprüche, wobei die Servereinheit (20), basierend auf den von dem Fernerfassungssystem (31) erhaltenen Fernerfassungsdaten, einen Identifikator zur eindeutigen Identifikation der Echtzeit-Navigationsdaten bestimmt, wobei der Identifikator und die Echtzeit-Navigationsdaten in dritten Speichermitteln (43) des Mobilkommunikationsnetzwerks (100) gespeichert werden, wobei der Identifikator an das Fahrzeug (10) übertragen wird.

8. Verfahren nach einem der vorhergehenden Ansprüche, wobei das Fahrzeug (10) - während es sich entlang der Bewegungsbahn (10') bewegt - den Identifikator zur eindeutigen Identifikation der Echtzeit-Navigationsdaten an vierte Speichermittel (44) des Mobilkommunikationsnetzwerks (100) überträgt, wobei das Fahrzeug (10) an die vierten Speichermittel (44) überträgt:
- nur den Identifikator,
- oder den Identifikator und die Fahrzeuginformationen bezüglich eines Betriebszustands des Fahrzeugs (10), während es sich entlang der Bewegungsbahn (10') bewegt,
wobei die vierten Speichermittel (44) vorzugsweise durch einen Cloud-Dienstanbieter des Mobilkommunikationsnetzwerks (100) bereitgestellt werden.

9. Verfahren nach einem der vorhergehenden Ansprüche, wobei die Echtzeit-Navigationsdaten Echtzeit-Bildinformationen bezüglich des Datums und der Position des Fahrzeugs (10) entlang der Bewegungsbahn (10') über dem Abdeckungsbereich (110') des Funkzugangsnetzwerks (110) umfassen, wobei das Verfahren die weiteren Schritte umfasst zum:
- Anzeigen, durch Anzeigemittel, die sich innerhalb des Fahrzeugs (10) befinden, der Echtzeit-Bildinformationen bei Empfang der Echtzeit-Navigationsdaten von der Servereinheit (20), wobei die Echtzeit-Bildinformationen vorzugsweise zweidimensionale oder dreidimensionale Informationen bezüglich des Fahrzeugs (10) und/oder der Gegenstände (1, 2, 3) umfassen, die durch das Fernerfassungssystem (31) innerhalb des Fernerfassungsbereichs (31') während des Zeitintervalls erfasst werden, wobei die Echtzeit-Bildinformationen vorzugsweise mindestens eines aus Positionsdaten, Geschwindigkeitsdaten und Metadaten bezüglich des Fahrzeug (10) und/oder der Gegenstände (1, 2, 3) umfassen, die durch das Fernerfassungssystem (31) innerhalb des Fernerfassungsbereichs (31') während des Zeitintervalls erfasst werden.

10. System zum Verbessern der Sicherheit zum Navigieren eines Fahrzeugs (10), indem dem Fahrzeug (10) über ein Mobilkommunikationsnetzwerk (100) Echtzeit-Navigationsdaten bereitgestellt werden, wobei das System das Mobilkommunikationsnetzwerk (100) und mindestens ein Fernerfassungssystem (31, 32) umfasst, wobei das Mobilkommunikationsnetzwerk (100) ein Funkzugangsnetzwerk (110) umfasst, wobei das Funkzugangsnetzwerk (110) einen Abdeckungsbereich (110') umfasst, wobei das mindestens eine Fernerfassungssystem (31, 32) mit dem Mobilkommunikationsnetzwerk (100) verbunden ist, wobei das mindestens eine Fernerfassungssystem (31, 32) ein Fernerfassungssystem (31) umfasst, wobei das Fernerfassungssystem (31) einen Fernerfassungsbereich (31') umfasst, wobei der Fernerfassungsbereich (31') zumindest teilweise mit dem Abdeckungsbereich (110') überlappt, wobei das Mobilkommunikationsnetzwerk (100) eine Servereinheit (20) umfasst, wobei die Servereinheit (20) eingerichtet ist, um - für den Fall, dass sich das Fahrzeug (10) auf einer Bewegungsbahn (10') des Fahrzeugs (10) über dem Abdeckungsbereich (110') des Funkzugangsnetzwerks (110) befindet - Bewegungsdaten bezüglich des Fahrzeugs (10) zu erhalten, wobei die Bewegungsdaten eine Standortinformation und eine Datumsinformation umfassen, wobei sich die Standortinformation auf eine Position des Fahrzeugs (10) entlang der Bewegungsbahn (10') des Fahrzeugs (10) über dem Abdeckungsbereich (10') bezieht, wobei die Datumsinformation ein Datum angibt, an dem sich das Fahrzeug (10) in der Position entlang der Bewegungsbahn (10') des Fahrzeugs (10) über dem Abdeckungsbereich (10') befindet, wobei die Servereinheit (20) eingerichtet ist, um, basierend auf den Bewegungsdaten bezüglich der Bewegungsbahn (10') des Fahrzeugs (10) über dem Abdeckungsbereich (110'), Fernerfassungsdaten von dem Fernerfassungssystem (31) zu erhalten, wobei sich die Fernerfassungsdaten auf das Fahrzeug (10) und/oder Gegenstände (1, 2, 3) beziehen, die durch das Fernerfassungssystem (31) innerhalb des Fernerfassungsbereichs (31') während eines Zeitintervalls erfasst werden, wobei das Zeitintervall das Datum umfasst, das durch die Datumsinformation der Bewegungsdaten angegeben wird, wobei das System eingerichtet ist, um, basierend auf den von dem Fernerfassungssystem (31) erhaltenen Fernerfassungsdaten, die Echtzeit-Navigationsdaten zum Verbessern der Sicherheit zum Navigieren des Fahrzeugs (10) zu bestimmen, wobei die Servereinheit (20) eingerichtet ist, um die Echtzeit-Navigationsdaten an das Fahrzeug (10) zu übertragen,
wobei die Servereinheit (20) mit einer Informationsliefereinheit (50) verbunden ist, wobei die Informationsliefereinheit (50) Speichermittel (49) umfasst, die Hilfsdaten bezüglich des Fahrzeugs (10) speichern, wobei die Hilfsdaten zum Erhöhen der Sicherheit und der Fähigkeit, wichtige Informationen im Voraus bereitzustellen, eingerichtet sind, wobei die Servereinheit (20) eingerichtet ist, um die Hilfsdaten in die Echtzeit-Navigationsdaten einzubeziehen, bevor die Echtzeit-Navigationsdaten an das Fahrzeug (10) übertragen werden,
wobei die Echtzeit-Navigationsdaten Bildinformationen umfassen, wobei das Fernerfassungssystem (31) eingerichtet ist, um bei Erfassung der Gegenstände (1, 2, 3) innerhalb des Fernerfassungsbereichs (31') während des Zeitintervalls Fernerfassungsdaten zu erzeugen, wobei die Gegenstände (1, 2, 3) andere Fahrzeuge oder Einheiten umfassen.

11. System nach Anspruch 10, wobei die Servereinheit (20) eingerichtet ist, um von dem Fahrzeug (10) erste geografische Daten zu empfangen, wobei die ersten geografischen Daten durch ein System für geografische Informationen erfasst werden, das sich innerhalb des Fahrzeugs (10) befindet, wobei das Mobilkommunikationsnetzwerk (100) eingerichtet ist, um zweite geografische Daten zu bestimmen, wobei die zweiten geografischen Daten durch ein mobiles Nachverfolgungssystem des Mobilkommunikationsnetzwerks (100) erfasst werden.

12. System nach einem der Ansprüche 10 oder 11, wobei die Servereinheit (20) eingerichtet ist, um, basierend auf den von dem Fernerfassungssystem (31) erhaltenen Fernerfassungsdaten, einen Identifikator zur eindeutigen Identifikation der Echtzeit-Navigationsdaten zu bestimmen, wobei das System eingerichtet ist, um den Identifikator und die Echtzeit-Navigationsdaten in dritten Speichermitteln (43) des Mobilkommunikationsnetzwerks (100) zu speichern, wobei das System eingerichtet ist, um den Identifikator an das Fahrzeug (10) zu übertragen.

13. System nach einem der Ansprüche 10 bis 12, wobei das System eingerichtet ist, um von dem Fahrzeug (10) - während sich das Fahrzeug (10) entlang der Bewegungsbahn (10') bewegt - entweder nur den Identifikator zur eindeutigen Identifikation der Echtzeit-Navigationsdaten oder den Identifikator zur eindeutigen Identifikation der Echtzeit-Navigationsdaten zusammen mit den Fahrzeuginformationen bezüglich eines Betriebszustands des Fahrzeugs (10), während es sich entlang der Bewegungsbahn (10') bewegt, zu empfangen.

14. Programm, umfassend einen computerlesbaren Programmcode, der, wenn er auf einem System aus Datenverarbeitungsvorrichtungen eines Mobilkommunikationsnetzwerks (100) und eines Fernerfassungssystems (31) ausgeführt wird, das System aus Datenverarbeitungsvorrichtungen dazu veranlasst, ein Verfahren nach einem der Ansprüche 1 bis 9 auszuführen.

15. Computerprogrammprodukt zum Verbessern der Sicherheit zum Navigieren eines Fahrzeugs (10), indem dem Fahrzeug (10) über ein Mobilkommunikationsnetzwerk (100) Echtzeit-Navigationsdaten bereitgestellt werden, wobei das Computerprogrammprodukt das Computerprogramm nach Anspruch 14 umfasst, das auf einem Speichermedium gespeichert ist.

## Revendications

1. Procédé pour améliorer la sécurité de navigation d'un véhicule (10) en fournissant des données de navigation en temps réel au véhicule (10) via un réseau de communication mobile (100), dans lequel le réseau de communication mobile (100) comprend un réseau d'accès radio (110), le réseau d'accès radio (110) comprenant une région de couverture (110'), dans lequel au moins un système de télédétection (31, 32) est relié au réseau de communication mobile (100), l'au moins un système de télédétection (31, 32) comprenant un système de télédétection (31), le système de télédétection (31) comprenant une région de télédétection (31'), dans lequel la région de télédétection (31') chevauche au moins partiellement la région de couverture (110'), dans lequel le réseau de communication mobile (100) comprend une entité de serveur (20), le procédé comprenant les étapes suivantes :
- l'obtention par l'entité de serveur (20) - dans un cas où le véhicule (10) est localisé sur un trajet de déplacement (10') du véhicule (10) à travers la région de couverture (110') du réseau d'accès radio (110) - de données de déplacement liées au véhicule (10), les données de déplacement incluant une information de localisation et une information de date, l'information de localisation étant liée à une position du véhicule (10) le long du trajet de déplacement (10') du véhicule (10) à travers la région de couverture (10'), l'information de date indiquant une date à laquelle le véhicule (10) est localisé sur la position le long du trajet de déplacement (10') du véhicule (10) à travers la région de couverture (10'),
- l'obtention par l'entité de serveur (20), d'après les données de déplacement liées au trajet de déplacement (10') du véhicule (10) à travers la région de couverture (110'), de données de télédétection auprès du système de télédétection (31), dans lequel les données de télédétection sont liées au véhicule (10) et/ou à des objets (1, 2, 3) qui sont détectés, par le système de télédétection (31), au sein de la région de télédétection (31') pendant un intervalle de temps, l'intervalle de temps incluant la date qui est indiquée par l'information de date des données de déplacement,
- la détermination, d'après les données de télédétection obtenues auprès du système de télédétection (31), des données de navigation en temps réel pour améliorer la sécurité de navigation du véhicule (10),
- la transmission par l'entité de serveur (20) des données de navigation en temps réel au véhicule (10),
dans lequel l'entité de serveur (20) est reliée à une entité de délivrance d'informations (50), l'entité de délivrance d'informations (50) comprenant des moyens de stockage (49) stockant des données d'assistance liées au véhicule (10), les données d'assistance étant configurées pour augmenter la sûreté et la capacité de fournir des informations importantes à l'avance, le procédé comprenant l'étape supplémentaire :
- d'inclusion par l'entité de serveur (20) des données d'assistance avec les données de navigation en temps réel avant transmission des données de navigation en temps réel au véhicule (10),
dans lequel les données de navigation en temps réel incluent des informations d'image, dans lequel les données de télédétection sont générées par le système de télédétection (31) lors d'une détection des objets (1, 2, 3) au sein de la région de télédétection (31') pendant l'intervalle de temps, dans lequel les objets (1, 2, 3) comprennent d'autres véhicules ou d'autres entités.

2. Procédé selon la revendication 1, le procédé comprenant l'étape supplémentaire de renouvellement automatique de données de navigation en temps réel, transmises au véhicule (10), sur la base d'au moins l'un parmi une résolution, des vitesses, des trajets de déplacement, des distances du véhicule (10) et/ou des objets (1, 2, 3).

3. Procédé selon l'une quelconque des revendications précédentes, dans lequel l'obtention, par l'entité de serveur (20), de données de déplacement liées au trajet de déplacement (10') du véhicule (10) à travers la région de couverture (110') inclut au moins l'une des étapes suivantes :
- la réception, par l'entité de serveur (20) depuis le véhicule (10), de premières données géographiques, les premières données géographiques étant détectées par un système d'informations géographiques localisé au sein du véhicule (10),
- la détermination, par le réseau de communication mobile (100), de secondes données géographiques, les secondes données géographiques étant détectées par un système de suivi mobile du réseau de communication mobile (100),
- le calcul, sur la base d'au moins l'un parmi un trajet de déplacement, une position et une vitesse des objets (1, 2, 3), d'une vue avec toutes les informations pertinentes sur ces objets (1, 2, 3) qui croisent le trajet de déplacement sur une certaine position et éventuellement une hauteur,
- la capture d'une information supplémentaire de trajets de déplacement, dans lequel l'information supplémentaire est stockée en temps réel par d'autres fournisseurs, pour améliorer les données d'informations propres.

4. Procédé selon l'une quelconque des revendications précédentes, dans lequel le réseau de communication mobile (100) comprend des premiers moyens de stockage (41) pour stocker les données de télédétection du système de télédétection (31), le procédé comprenant en outre les étapes suivantes :
- la fourniture par le système de télédétection (31) de mises à jour de données de télédétection aux premiers moyens de stockage (41),
- l'obtention par l'entité de serveur (20), d'après les données de déplacement liées au trajet de déplacement (10') du véhicule (10) à travers la région de couverture (110'), des mises à jour de données de télédétection auprès des premiers moyens de stockage (41).

5. Procédé selon l'une quelconque des revendications précédentes, dans lequel les données de navigation en temps réel pour améliorer la sécurité de navigation du véhicule (10) sont déterminées par l'entité de serveur (20) et/ou par le système de télédétection (31).

6. Procédé selon l'une quelconque des revendications précédentes, dans lequel les données de navigation en temps réel sont obtenues en générant un ensemble optimisé de données de télédétection, dans lequel l'ensemble optimisé de données de télédétection est généré par au moins l'une des étapes suivantes :
- l'inclusion seulement, avec les données de navigation en temps réel - qui sont transférées au réseau de communication mobile (100) ou fournies par le réseau de communication mobile (100) - d'un sous-ensemble des données de télédétection liées à un sous-ensemble des objets (1, 2, 3), le sous-ensemble des objets (1, 2, 3) étant associé à des positions des objets (1, 2, 3) dans des environs prédéterminés du trajet de déplacement (10') du véhicule (10) à travers la région de couverture (110'),
- l'inclusion seulement, aux données de navigation en temps réel, d'un sous-ensemble des données de télédétection liées aux objets (1, 2, 3) qui sont détectés dans des intervalles de temps séparés d'un laps de temps prédéterminé, dans lequel le laps de temps est de préférence déterminé et dépend de la base de couverture au sein d'une image transférée, d'un trajet de déplacement et d'une vitesse du véhicule (10) et des objets (1, 2, 3),
- l'inclusion seulement, avec les données de navigation en temps réel, d'un sous-ensemble des données de télédétection selon une information de profil d'abonné liée à un utilisateur du véhicule (10), dans lequel l'information de profil d'abonné est stockée au sein de deuxièmes moyens de stockage (42) du réseau de communication mobile (100), le procédé comprenant de préférence l'étape supplémentaire :
- de réduction d'une résolution d'image associée à une information d'image des données de navigation en temps réel d'après au moins l'un parmi une position, un caractère unique géographique, une vitesse et une altitude du véhicule (10) et/ou des objets (1, 2, 3).

7. Procédé selon l'une quelconque des revendications précédentes, dans lequel l'entité de serveur (20) détermine, d'après les données de télédétection obtenues auprès du système de télédétection (31), un identifiant pour une identification unique des données de navigation en temps réel, dans lequel l'identifiant et les données de navigation en temps réel sont stockés dans des troisièmes moyens de stockage (43) du réseau de communication mobile (100), dans lequel l'identifiant est transmis au véhicule (10).

8. Procédé selon l'une quelconque des revendications précédentes, dans lequel le véhicule (10) - tandis qu'il se déplace le long du trajet de déplacement (10') - transmet l'identifiant pour une identification unique des données de navigation en temps réel à des quatrièmes moyens de stockage (44) du réseau de communication mobile (100), dans lequel le véhicule (10) transmet aux quatrièmes moyens de stockage (44)
- seulement l'identifiant,
- ou l'identifiant et une information de véhicule liée à un statut de fonctionnement du véhicule (10) tandis qu'il se déplace le long du trajet de déplacement (10'),
dans lequel les quatrièmes moyens de stockage (44) sont de préférence fournis par un fournisseur de services infonuagiques du réseau de communication mobile (100).

9. Procédé selon l'une quelconque des revendications précédentes, dans lequel les données de navigation en temps réel comprennent des informations d'image en temps réel liées à la date et à la position du véhicule (10) le long du trajet de déplacement (10') à travers la région de couverture (110') du réseau d'accès radio (110), le procédé comprenant les étapes supplémentaires :
- d'affichage, par des moyens d'affichage localisés au sein du véhicule (10), de l'information d'image en temps réel lors de la réception des données de navigation en temps réel en provenance de l'entité de serveur (20), dans lequel les informations d'image en temps réel incluent de préférence des informations bidimensionnelles ou tridimensionnelles liées au véhicule (10) et/ou à des objets (1, 2, 3) qui sont détectés, par le système de télédétection (31), au sein de la région de télédétection (31') pendant l'intervalle de temps, dans lequel les informations d'image en temps réel incluent de préférence au moins l'une parmi des données de position, des données de vitesse et des métadonnées liées au véhicule (10) et/ou aux objets (1, 2, 3) qui sont détectés, par le système de télédétection (31), au sein de la région de télédétection (31') pendant l'intervalle de temps.

10. Système pour améliorer la sécurité de navigation d'un véhicule (10) en fournissant des données de navigation en temps réel au véhicule (10) via un réseau de communication mobile (100), le système comprenant le réseau de communication mobile (100) et au moins un système de télédétection (31, 32), dans lequel le réseau de communication mobile (100) comprend un réseau d'accès radio (110), le réseau d'accès radio (110) comprenant une région de couverture (110'), dans lequel l'au moins un système de télédétection (31, 32) est relié au réseau de communication mobile (100), l'au moins un système de télédétection (31, 32) comprenant un système de télédétection (31), le système de télédétection (31) comprenant une région de télédétection (31'), dans lequel la région de télédétection (31') chevauche au moins partiellement la région de couverture (110'), dans lequel le réseau de communication mobile (100) comprend une entité de serveur (20), dans lequel l'entité de serveur (20) est configurée pour obtenir -dans le cas où le véhicule (10) est localisé sur un trajet de déplacement (10') du véhicule (10) à travers la région de couverture (110') du réseau d'accès radio (110) - des données de déplacement liées au véhicule (10), les données de déplacement incluant une information de localisation et une information de date, l'information de localisation étant liée à une position du véhicule (10) le long du trajet de déplacement (10') du véhicule (10) à travers la région de couverture (10'), l'information de date indiquant une date à laquelle le véhicule (10) est localisé sur la position le long du trajet de déplacement (10') du véhicule (10) à travers la région de couverture (10'), dans lequel l'entité de serveur (20) est configurée pour obtenir, d'après les données de déplacement liées au trajet de déplacement (10') du véhicule (10) à travers la région de couverture (110'), des données de télédétection auprès du système de télédétection (31), dans lequel les données de télédétection sont liées au véhicule (10) et/ou aux objets (1, 2, 3) qui sont détectés, par le système de télédétection (31), au sein de la région de télédétection (31') pendant un intervalle de temps, l'intervalle de temps incluant la date qui est indiquée par l'information de date des données de déplacement, le système étant configuré pour déterminer, d'après les données de télédétection obtenues auprès du système de télédétection (31), les données de navigation en temps réel pour améliorer la sécurité de navigation du véhicule (10), dans lequel l'entité de serveur (20) est configurée pour transmettre les données de navigation en temps réel au véhicule (10),
dans lequel l'entité de serveur (20) est reliée à une entité de délivrance d'informations (50), l'entité de délivrance d'informations (50) comprenant des moyens de stockage (49) stockant des données d'assistance liées au véhicule (10), les données d'assistance étant configurées pour augmenter la sûreté et la capacité de fournir des informations importantes à l'avance, dans lequel l'entité de serveur (20) est configurée pour inclure les données d'assistance avec les données de navigation en temps réel avant transmission des données de navigation en temps réel au véhicule (10), dans lequel les données de navigation en temps réel incluent des informations d'image, dans lequel le système de télédétection (31) est configuré pour générer les données de télédétection lors d'une détection des objets (1, 2, 3) au sein de la région de télédétection (31') pendant l'intervalle de temps, dans lequel les objets (1, 2, 3) comprennent d'autres véhicules ou d'autres entités.

11. Système selon la revendication 10, dans lequel l'entité de serveur (20) est configurée pour recevoir, en provenance du véhicule (10), des premières données géographiques, les premières données géographiques étant détectées par un système d'informations géographiques localisé au sein du véhicule (10), dans lequel le réseau de communication mobile (100) est configuré pour déterminer des secondes données géographiques, les secondes données géographiques étant détectées par un système de suivi mobile du réseau de communication mobile (100).

12. Système selon l'une quelconque des revendications 10 ou 11, dans lequel l'entité de serveur (20) est configurée pour déterminer, d'après les données de télédétection obtenues auprès du système de télédétection (31), un identifiant pour une identification unique des données de navigation en temps réel, le système étant configuré pour stocker l'identifiant et les données de navigation en temps réel dans des troisièmes moyens de stockage (43) du réseau de communication mobile (100), le système étant configuré pour transmettre l'identifiant au véhicule (10).

13. Système selon l'une quelconque des revendications 10 à 12, le système étant configuré pour recevoir en provenance du véhicule (10) - tandis que le véhicule (10) se déplace le long du trajet de déplacement (10') - soit seulement l'identifiant pour une identification unique des données de navigation en temps réel soit l'identifiant pour une identification unique des données de navigation en temps réel conjointement avec une information de véhicule liée à un statut de fonctionnement du véhicule (10) tandis qu'il se déplace le long du trajet de déplacement (10').

14. Programme comprenant un code de programme lisible par ordinateur qui, lorsqu'il est exécuté sur un système de dispositifs informatiques d'un réseau de communication mobile (100) et un système de télédétection (31), amène le système de dispositifs informatiques à réaliser un procédé selon l'une quelconque des revendications 1 à 9.

15. Produit-programme d'ordinateur pour améliorer la sécurité de navigation d'un véhicule (10) en fournissant des données de navigation en temps réel au véhicule (10) via un réseau de communication mobile (100), le produit-programme d'ordinateur comprenant le programme d'ordinateur de la revendication 14 stocké sur un support de stockage.
